# EUROPEAN PATENT APPLICATION

(11) **EP 3 239 962 A1**
(43) Date of publication of application: **01.11.2017**
(21) Application number: 15872521.8
(22) Date of filing: 11.11.2015
(51) Int. Cl.: G09C 1/00

(54) **ENCODING DEVICE**

(30) Priority: 26.12.2014 JP 2014266066
(71) Applicant: DNP Hypertech Co. Ltd., Kyoto-shi, Kyoto 600-8813 (JP)
(72) Inventor: OGAWA, Hideaki, Kyoto-shi Kyoto 600-8813 (JP)
(74) Representative: Erhardt, Martin
(86) International application number: PCT/JP2015/081756
(87) International publication number: WO 2016/103952

(57) **Abstract**

[Problem]

In the prior art, the encryption is based on conversion in the 4 byte unit, and there are "2 to the 32^{nd} power" types of existing information. Thus, the prior art has a problem that details of conversion in the encryption can be specified in actuality through verification using a method of inputting the "2 to 32^{nd} power" information which is known in advance so as to examine a conversion result. Thus, the present invention provides an encrypting device which makes decryption virtually impossible by devising an encryption unit.

[Solution]

An encrypting device for encrypting information into encrypted information is developed, which is composed of: an information obtaining unit for obtaining information; a unitization-for-conversion unit for unitizing the obtained information to unitized information in the 16-byte unit for conversion by a conversion unit which will be described later; and the conversion unit for converting the unitized information unitized in the unitization-for-conversion unit into converted unitized information using a function which cannot be expressed in a single linear expression.

## Description

### [Technical Field]

The present invention relates to an encrypting device which encrypts information to generate encrypted information.

### [Background Art]

In general, an encrypting device for encrypting information is known.

It is important for the encrypting device to include a function of protection from a risk of decryption from a third party. That is because the purpose of encryption is to give confidentiality to the information, but if decryption by a third party is easy, the confidentiality deteriorates, and the purpose of encryption is not accomplished.

Methods of decryption by a third party generally include, after communication on encrypted information is intercepted, (1) a method of applying inverse conversion of an already held fixed function to the obtained encrypted information; and (2) a method in which an encryption function is estimated from combination of information of an encryption target and the encrypted information and the inverse conversion is applied.

In such encrypting device, there is an idea for making decryption of encryption difficult. For example, Patent Literature 1 can be cited as a prior-art document describing the idea.

### [Citation List]

### [Patent Literature]

Patent Literature 1: National Publication of Internal Patent Application No. 2010-510539

### [Summary of Invention]

### [Problem to be Solved by Invention]

Patent Literature 1 is a method in which a function of inputting an encryption key to an encryption processing unit is added and a function or a scheme of encryption is changed in accordance with information of the encryption key input each time in order to solve a problem that the function applied to one implementation is conventionally fixed.

According to this method, since the encryption function differs for each of input information of the encryption key, even if a third party intercepts communication and obtains the encrypted information, the encryption cannot be decrypted by a method of applying inverse conversion of the already held fixed function.

However, Patent Literature 1 has a risk that the encryption function is decrypted depending on a decryption level of the third party. Specifically, since Patent Literature 1 has no feature in a unit of applying conversion in encryption processing, the encryption is based on conversion in the 4 byte unit as before, and there are "2 to the 32^{nd} power" types of existing information. Thus, it has a problem that details of conversion in the encryption can be specified in actuality through verification using a method of inputting the "2 to 32^{nd} power" information which is known in advance so as to examine a conversion result.

### [Solution to Problem]

Thus, the present invention provides an encrypting device which makes decryption virtually impossible by devising an encryption unit. Moreover, an encrypting device including a function that decryption is made impossible by a method in which "(2) an encryption function is estimated from combination of information of an encryption target and the encrypted information" is provided by devising details of the encryption function.

Specifically, an encrypting device, an encryption method, and an encryption program having the following features are provided. Hereinafter, details of the present invention are listed as the encrypting device, but the present application also includes an encryption scheme and an encryption program having the similar features as targets.

First, the present invention provides an encrypting device for encrypting information into encrypted information, composed of: an information obtaining unit for obtaining information; a unitization-for-conversion unit for unitizing the obtained information to unitized information in the 16-byte unit for conversion in a conversion unit which will be described later; and the conversion unit for converting the unitized information unitized in the unitization-for-conversion unit into converted unitized information using a function which cannot be expressed in a single linear expression.

Moreover, the present invention provides the encrypting device, further including, in addition to the feature above, an encrypted information coupling unit for coupling all the converted unitized information obtained in the conversion unit into encrypted information.

Moreover, the present invention provides the encrypting device, in which, in addition to the feature above, the conversion unit includes a combined converting means for executing combined conversion in which forward conversion and inverse conversion for the same conversion are combined with adjacent original conversion.

Moreover, the present invention provides the encrypting device, in which, in addition to the feature above, the conversion unit includes an exclusive OR processing means for executing conversion processing in which: exclusive OR processing is executed on two or more of forward conversion results obtained as results of operations of a front stage combining the forward conversion with input values; and then the same number of conversion processing by a rear stage as the input values is obtained in which the inverse conversion is combined.

Moreover, the present invention provides the encrypting device, in which, in addition to the feature above, the conversion unit holds a converting means for executing conversion using a conversion table determining a relationship between a conversion input and a conversion output which cannot be expressed in a linear expression.

Moreover, the present invention provides the encrypting device, in which, in addition to the feature above, the conversion unit includes a table applying means for applying the conversion table only to some of a plurality of conversion processing which should be executed in the conversion unit.

Moreover, the present invention provides the encrypting device, in which, in addition to the feature above, the conversion unit further includes an applied table controlling means for dynamically controlling the table which should be applied to a plurality of processing stages.

Moreover, the present invention provides the encrypting device, in which, in addition to the feature above, the conversion unit further includes an applied position controlling means for dynamically controlling an applied position of the table which should be applied to the input value.

Lastly, the present invention provides a decrypting device for decrypting encrypted information encrypted in the encrypting device into information, composed of: an encrypted information obtaining unit for obtaining the encrypted information; a unitization-for-inverse conversion unit for unitizing the obtained encrypted information to unitized encrypted information in the 16-byte unit for conversion in an inverse conversion unit which will be described later; the inverse conversion unit for converting, inversely with respect to the conversion in the converting unit, the unitized encrypted information unitized in the unitization-for-inverse conversion unit into inversely-converted unitized information; and an original information coupling unit for coupling all the inversely-converted unitized information obtained in the inverse conversion unit into original information which is information to be an origin of the encrypted information.

### [Advantageous Effect of Invention]

By means of the present invention, encryption for which decryption by a third party is virtually impossible can be generated, and an encrypting device for which decryption is virtually impossible can be provided.

### [Brief Description of the Drawings]

[Fig. 1] Fig. 1 is a functional block of an encrypting device according to the embodiment 1.
[Fig. 2] Fig. 2 is a detail of encryption when an arbitrary function is used in the embodiment 1.
[Fig. 3] Fig. 3 is a view illustrating a hardware configuration of the encrypting device according to the embodiment 1.
[Fig. 4] Fig. 4 is a view illustrating a flow of processing when the encrypting device according to the embodiment 1 is used.
[Fig. 5] Fig. 5 is a view illustrating a relationship between a unitization-for-conversion step and a conversion step in a configuration in which the conversion is executed sequentially as each of them is unitized to the 16-byte unit.
[Fig. 6] Fig. 6 is a view of a functional block of an encrypting device according to the embodiment 2.
[Fig. 7] Fig. 7 is a view illustrating a hardware configuration of the encrypting device according to the embodiment 2.
[Fig. 8] Fig. 8 is a view illustrating a flow of processing when the encrypting device according to the embodiment 2 is used.
[Fig. 9] Fig. 9 is a view of a functional block of an encrypting device according to the embodiment 3.
[Fig. 10] Fig. 10 is a view illustrating a flow of a prior-art combined conversion.
[Fig. 11] Fig. 11 is a view illustrating a detail of a combined conversion in the embodiment 3.
[Fig. 12] Fig. 12 is a view illustrating a hardware configuration of the encrypting device according to the embodiment 3.
[Fig. 13] Fig. 13 is a view illustrating a flow of processing when the encrypting device according to the embodiment 3 is used.
[Fig. 14] Fig. 14 is a view of a functional block of an encrypting device according to the embodiment 4.
[Fig. 15] Fig. 15 is a view illustrating a detail of a many-to-one conversion interposing a conventional XOR operation.
[Fig. 16] Fig. 16 is a view illustrating a detail of the many-to-one conversion interposing the XOR operation in the embodiment 4.
[Fig. 17] Fig. 17 is a view illustrating a hardware configuration of the encrypting device according to the embodiment 4.
[Fig. 18] Fig. 18 is a view illustrating a flow of processing when the encrypting device according to the embodiment 4 is used.
[Fig. 19] Fig. 19 is a view of a functional block of an encrypting device according to the embodiment 5.
[Fig. 20] Fig. 20 is a view illustrating a detail of a conversion using a conversion table.
[Fig. 21] Fig. 21 is a view illustrating a hardware configuration of the encrypting device according to the embodiment 5.
[Fig. 22] Fig. 22 is a view illustrating a flow of processing when the encrypting device according to the embodiment 5 is used.
[Fig. 23] Fig. 23 is a view of a functional block of an encrypting device according to the embodiment 6.
[Fig. 24] Fig. 24 is a view illustrating a hardware configuration of the encrypting device according to the embodiment 6.
[Fig. 25] Fig. 25 is a view illustrating a flow of processing when the encrypting device according to the embodiment 6 is used.
[Fig. 26] Fig. 26 is a view of a functional block of an encrypting device according to the embodiment 7.
[Fig. 27] Fig. 27 is a view illustrating a hardware configuration of the encrypting device according to the embodiment 7.
[Fig. 28] Fig. 28 is a view illustrating a flow of processing when the encrypting device according to the embodiment 7 is used.
[Fig. 29] Fig. 29 is a view of a functional block of an encrypting device according to the embodiment 8.
[Fig. 30] Fig. 30 is a view illustrating a hardware configuration of the encrypting device according to the embodiment 8.
[Fig. 31] Fig. 31 is a view illustrating a flow of processing when the encrypting device according to the embodiment 8 is used.
[Fig. 32] Fig. 32 is a view of a functional block of a decrypting device according to the embodiment 9.
[Fig. 33] Fig. 33 is a view illustrating a hardware configuration of the decrypting device according to the embodiment 9.
[Fig. 34] Fig. 34 is a view illustrating a flow of processing when the decrypting device according to the embodiment 9 is used.

### [Description of Embodiments]

Hereinafter, embodiments of the present invention will be described together with illustrated examples. The mutual relationship between the embodiments and claims is as below. The embodiment 1 mainly relates to claims 1, 10, 19, the embodiment 2 mainly relates to claims 2, 11, 20, the embodiment 3 mainly relates to claims 3, 12, 21, the embodiment 4 mainly relates to claims 4, 13, 22, the embodiment 5 mainly relates to claims 5, 14, 23, the embodiment 6 mainly relates to claims 6, 15, 24, the embodiment 7 mainly relates to claims 7, 16, 25, the embodiment 8 mainly relates to claims 8, 17, 26, and the embodiment 9 mainly relates to claims 9, 18, 27. It should be noted that the present invention is not limited to these embodiments, and may be performed in various modes without departing from the scope of the invention.

### Embodiment 1

### <Outline of this embodiment>

An encrypting device according to this embodiment is an encrypting device consisting of an information obtaining unit, a unitization-for-conversion unit, and a conversion unit.

The encrypting device according to this embodiment has the most basic configuration of the present invention. It has a feature particularly in a function of the unitization-for-conversion unit. Hereinafter, the encrypting device according to this embodiment will be described separately from viewpoints of its functional configuration, a hardware configuration, and a processing method.

### <Functional configuration>

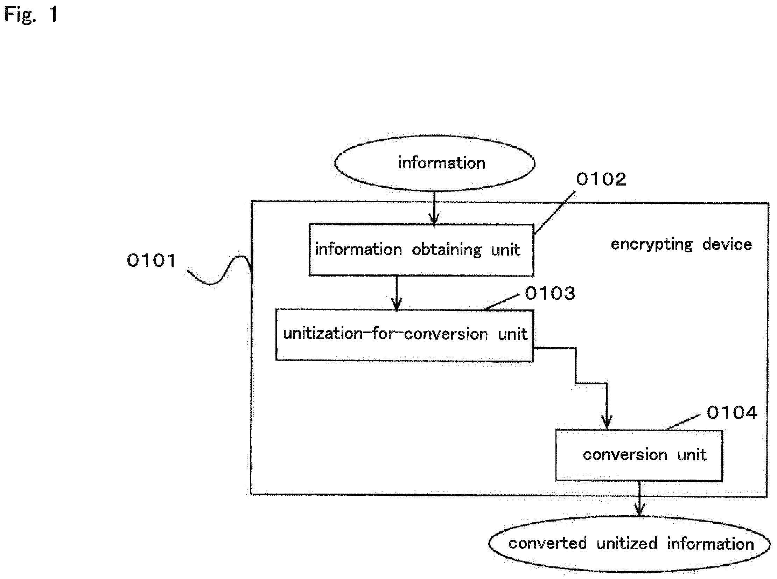

Fig. 1 is a functional block of the encrypting device according to the embodiment 1. In the encrypting device (0101), the information obtaining unit (0102), the unitization-for-conversion unit (0103), and the conversion unit (0104) are present. Hereinafter, the respective functions will be described.

First, the "information obtaining unit" is a function of obtaining information. The information here is information to be encrypted. A method of obtainment may be a method of direct input using a keyboard or the like or may be a method of transferring existing information or any others.

For example, if sentences prepared by sentence creation software are to be encrypted, sentence information stored in a server or an HDD of an external device is transferred to the encrypting device so as to obtain the information.

Subsequently, the "unitization-for-conversion unit" is a function of unitizing the obtained information to unitized information in the 16-byte unit which is a unit for conversion in the conversion unit which will be described later. As described above, it was normal that the 16 bytes are further divided into four smaller units of 4-byte unit (32 bits), and encryption conversion is executed. However, by executing the conversion of encryption keeping the 16-byte unit (128 bits), the number of variables to be input becomes "2 to 128^{th} power". Thus, it becomes necessary to input the astronomical number of "2 to 128^{th} power" values known in advance and to examine and verify a conversion result in order to specify details of conversion in the encryption, which makes specification of the details of conversion in the encryption virtually impossible. A method of realization is operation processing by a CPU in the encrypting device as will be described later.

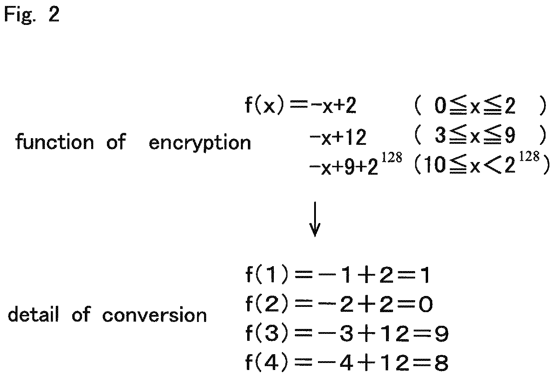

Lastly, the "conversion unit" is a function of converting the unitized information unitized in the unitization-for-conversion unit into converted unitized information using a function which cannot be expressed in a single linear expression. A typical aspect of the "function which cannot be expressed in a single linear expression" is application of irregular conversion by a "conversion table" to byte data constituting the unitized information and operation between the constituent bytes, which will be described in the embodiment 5, but this is not limiting. Fig. 2 is a view illustrating the conversion when a function f(x) exemplified as an encryption function is applied once. For example, a non-linear function such as a function described in Fig. 2 may be used as an encryption function.

Details of the encryption when such functions are used will be described by using Fig. 2. When the function is applied to a value "1" before the conversion, the obtained value is "1", when the function is applied to a value "2" before the conversion, the obtained value is "0", when the function is applied to a value "3" before the conversion, the obtained value is "9", and when the function is applied to a value "4" before the conversion, the obtained value is "8".

It should be noted that the function of the conversion unit using the encryption function has been described above, but the function f(x) is only an example, and the details of the present invention are not limited to this conversion.

A method of realizing the conversion unit is the operation processing by the CPU in the encrypting device as will be described later.

As described above, as compared with the prior art of conversion in the unit of 4 bytes (32 bits), it becomes necessary to input the astronomical number of "2 to 128^{th} power" values known in advance and to examine and verify the conversion result in order to specify the details of conversion in the encryption by executing the conversion of the encryption in the unit of 16 bytes (128 bits), and specification of the details of conversion in the encryption is made virtually impossible.

### <Hardware configuration>

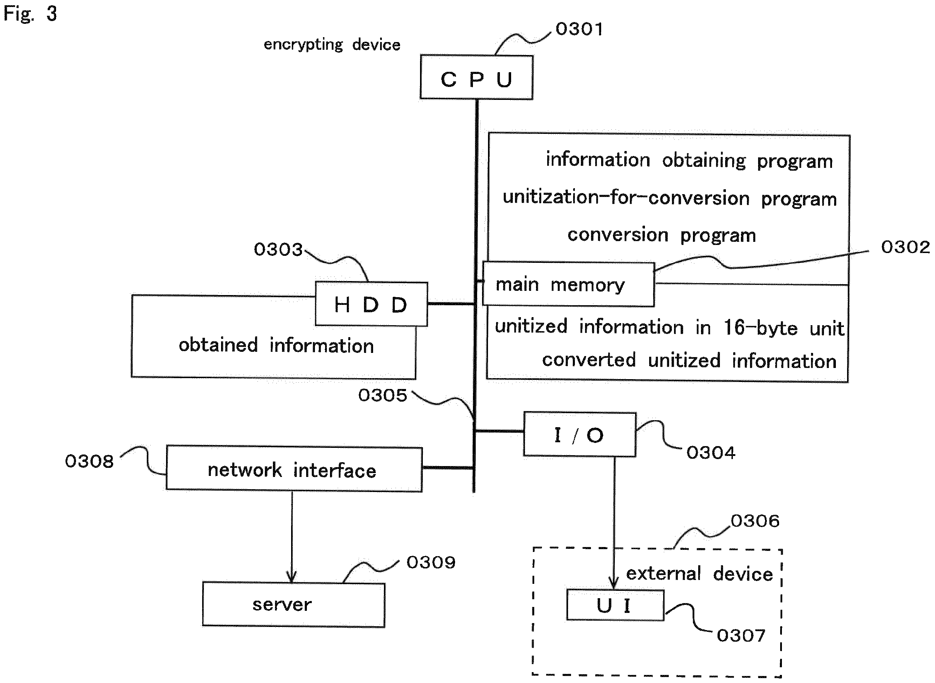

Fig. 3 is a view illustrating a hardware configuration of the encrypting device according to this embodiment. Hereinafter, description will be made by using this figure.

As illustrated in this figure, the encrypting device according to this embodiment includes a "CPU (Central Processing Unit)" (0301) executing various types of operation processing and a "main memory" (0302). Moreover, a "HDD" (0303) for holding obtained information or the like, an "I/O (input/output)" (0304) for conducting transmission/reception of information with respect to an external device, and a "network interface" (0308) for conducting transmission/reception of information with a server. They are mutually connected through a data communication path such as a "system bus" (0305) and execute transmission/reception and processing of the information. It should be noted that the "server" and the "network interface" are not indispensable constituent elements in the present invention.

Moreover, the "main memory" reads out a program for executing various types of processing in order to cause the "CPU" to execute it, and at the same time, provides a work area which is also an operation area of the program. Moreover, a plurality of addresses is allocated to the "main memory" and the "HDD", respectively, and the programs executed by the "CPU" can specify and access the addresses to exchange data mutually, thereby executing the processing. In this embodiment, the programs stored in the "main memory" are an information obtaining program, a unitization-for-conversion program, and a conversion program.

An "I/O" in the encrypting device obtains information transmitted from a "UI (user interface)" (0307) of an external device (0306), for example, with the information obtaining program stored in the "main memory". Alternatively, it obtains information through the "network interface" from a "server" (0309). The obtained information is stored in the "HDD". Then, this obtained information is unitized to unitized information in the 16 byte unit which is a conversion unit by operation processing of the "CPU" using the unitization-for-conversion program stored in the "main memory". This unitized information unitized as above is stored in the "main memory". Moreover, this unitized information is converted into converted unitized information using a function which cannot be expressed in a single linear expression by the operation processing of the "CPU" using the conversion program stored in the "main memory". This converted unitized information is stored in the "main memory".

As described above, as compared with the prior art of conversion in the 4-byte unit (32 bits), it becomes necessary to input the astronomical number of "2 to 128^{th} power" values known in advance and to examine and verify the conversion result in order to specify the details of conversion in the encryption by executing the conversion of the encryption in the 16-bytes unit (128 bits), and specification of the details of conversion in the encryption is made virtually impossible.

### <Flow of processing>

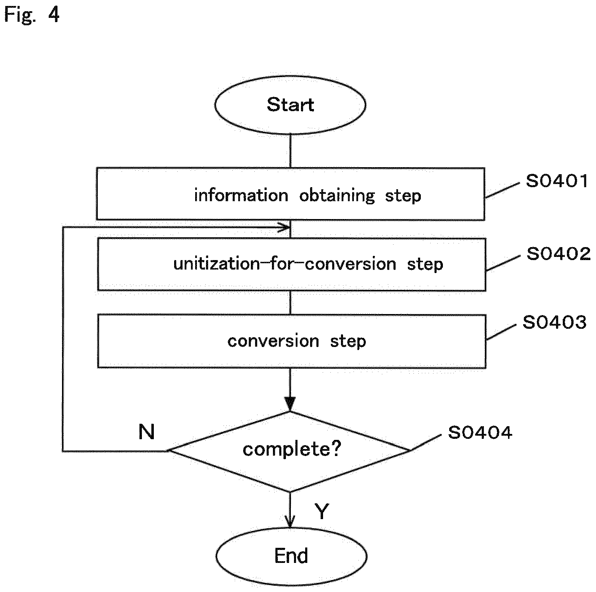

Fig. 4 is a view illustrating a flow of processing when the encrypting device according to this embodiment is used. The flow of the processing of the encrypting device according to this embodiment is divided into an information obtaining step, a unitization-for-conversion step, and a conversion step. Hereinafter, details and the flow of each processing will be described.

The "information obtaining step" (S0401) is a stage of obtaining information. The information here is information to be encrypted. A method of obtainment may be a method of direct input using a keyboard or the like, a method of transferring existing information or any others.

The "unitization-for-conversion step" (S0402) is a stage of unitizing the obtained information to unitized information in the 16-byte unit which is a unit for conversion in the conversion step which will be described later. As described above, it was normal that the 16 bytes are further divided into four smaller units of 4-byte unit (32 bits), and encryption conversion is executed. However, by executing the conversion of encryption keeping the 16-byte unit (128 bits), the number of variables to be input becomes "2 to 128^{th} power". Thus, it becomes necessary to input the astronomical number of "2 to 128^{th} power" values known in advance and to examine and verify a conversion result in order to specify the details of conversion in the encryption, which makes specification of the details of conversion in the encryption virtually impossible. A method of realization is operation processing by the CPU in the encrypting device.

The "conversion step" (S0403) is a stage of converting the unitized information unitized in the unitization-for-conversion step into the converted unitized information using a function which cannot be expressed in a single linear expression. A typical aspect of the "function which cannot be expressed in a single linear expression" is application of irregular conversion by a "conversion table" to byte data constituting the unitized information and operation between the constituent bytes, which will be described later in the embodiment 5, but this is not limiting.

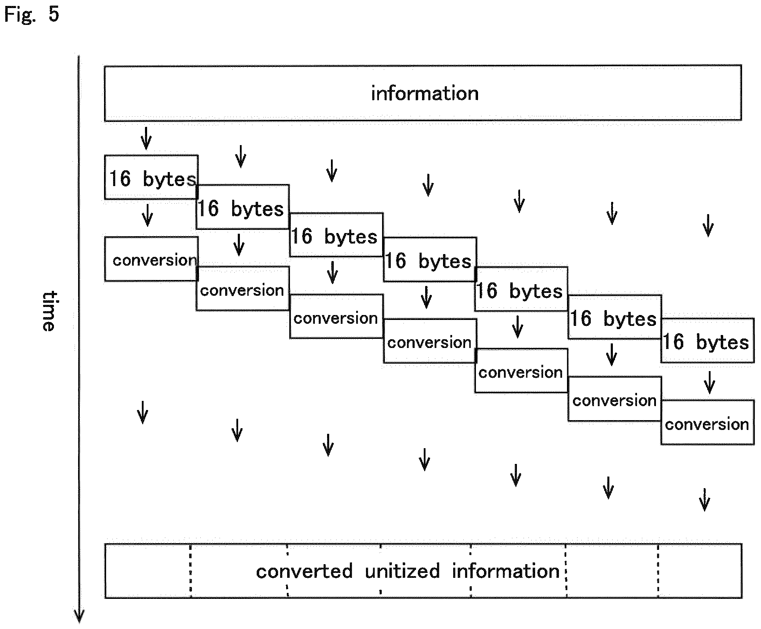

A relationship between the unitization-for-conversion step and the conversion step is such that the conversions may be executed altogether after all the obtained information has been unitized to the 16-byte unit or the conversion may be executed sequentially as each of them is unitized to the 16-byte unit. Fig. 5 is a view illustrating a conversion mode of the latter case. Even if a part of the obtained information has been converted, the other part has not been converted yet. Thus, processing for converting the unconverted part is needed.

Specifically, a step (S0404) of determining whether the conversion has been completed for all the obtained information becomes necessary. If it is determined to be completed at this determination step, the step is finished, while if it is determined to be incomplete, the routine returns to the unitization-for-conversion step and the unitization processing and the conversion processing are repeated for the remaining part until it is completed.

As described above, as compared with the prior art of conversion in the 4-byte unit (32 bits), it becomes necessary to input the astronomical number of "2 to 128^{th} power" values known in advance and to examine and verify the conversion result in order to specify the details of conversion in the encryption by executing the conversion of the encryption in the 16-byte unit (128 bits), and specification of the details of conversion in the encryption is made virtually impossible.

### Embodiment 2

### <Outline of this embodiment>

An encrypting device according to this embodiment is an encrypting device further having an encrypted information coupling unit in addition to the feature of the embodiment 1.

Hereinafter, a functional configuration, a hardware configuration, and a flow of processing will be described in order.

### <Functional configuration>

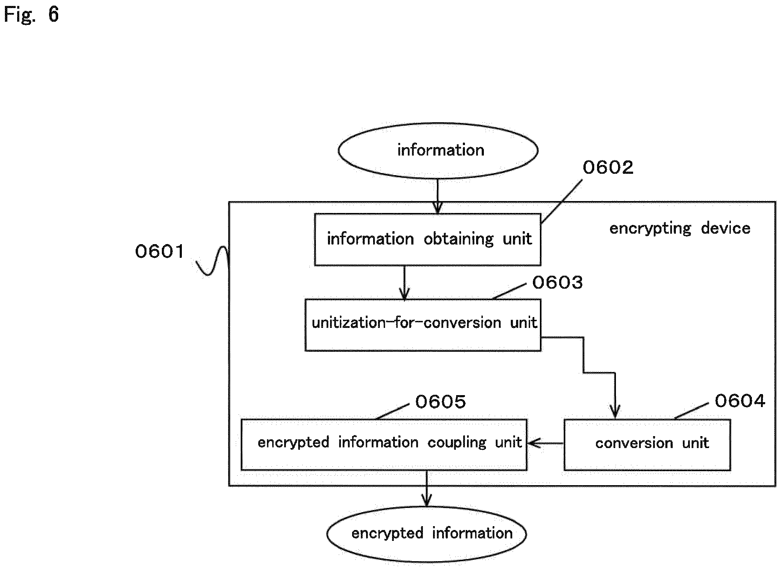

Fig. 6 is a view illustrating the functional configuration of the encrypting device according to this embodiment. In an encrypting device (0601) in this embodiment, an information obtaining unit (0602), a unitization-for-conversion unit (0603), and a conversion unit (0604) are provided similarly to the embodiment 1. Their functional configurations are similar to those in the embodiment 1. Hereinafter, a function of an encrypted information coupling unit (0605) added in this embodiment will be described.

The "encrypted information coupling unit" is a function of coupling all the converted unitized information obtained in the conversion unit into the encrypted information. A method of realization is executing the coupling by the operation processing by the "CPU" which will be described later.

A mode of coupling is preferably such that the coupling is performed in the same order as the order in unitization to 16 bytes in the unitization-for-conversion unit. Then, processing for combining is facilitated.

In this manner, the converted unitized information is coupled into the encrypted information so as to be a target of transmission/reception as a single piece of the information.

### <Hardware configuration>

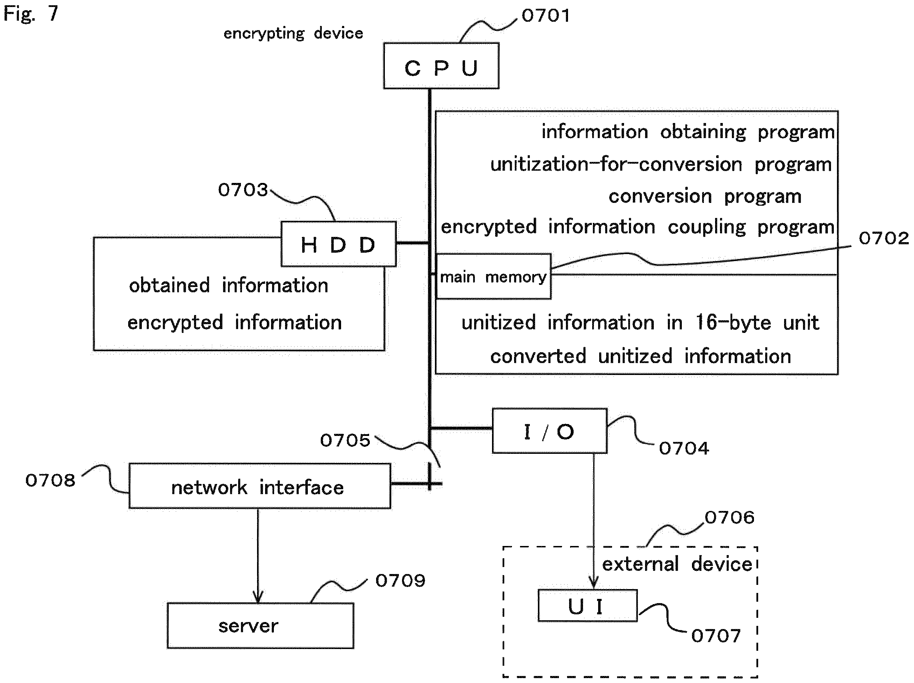

Fig. 7 is a schematic view illustrating an example of a configuration of the encrypting device in which each of the aforementioned functional constituent element is realized as hardware. The encrypting device includes a "CPU (Central Processing Unit)" (0701), a "main memory" (0702), an "HDD" (0703), an "I/O (input/output)" (0704), a "system bus" (0705) and a "network interface" (0708) conducting transmission/reception of information with a server (0709), and an "external device" (0706) includes an "UI" (0707). The programs stored in the "main memory" in this embodiment are an information obtaining program, a unitization-for-conversion program, a conversion program, and an encrypted information coupling program.

By using these figures, those specific to this embodiment among the hardware components in each processing in this device will be described, while the other parts are similar to those in the description of the embodiment 1.

As described in the embodiment 1, the converted unitized information is generated by the encrypting device. This converted unitized information is coupled into the encrypted information by the operation processing of the "CPU" using the encrypted information coupling program stored in the "main memory". This encrypted information is stored in the "HDD".

In this manner, the converted unitized information is coupled into the encrypted information so as to be a target of transmission/reception as a single piece of the information.

### <Flow of processing>

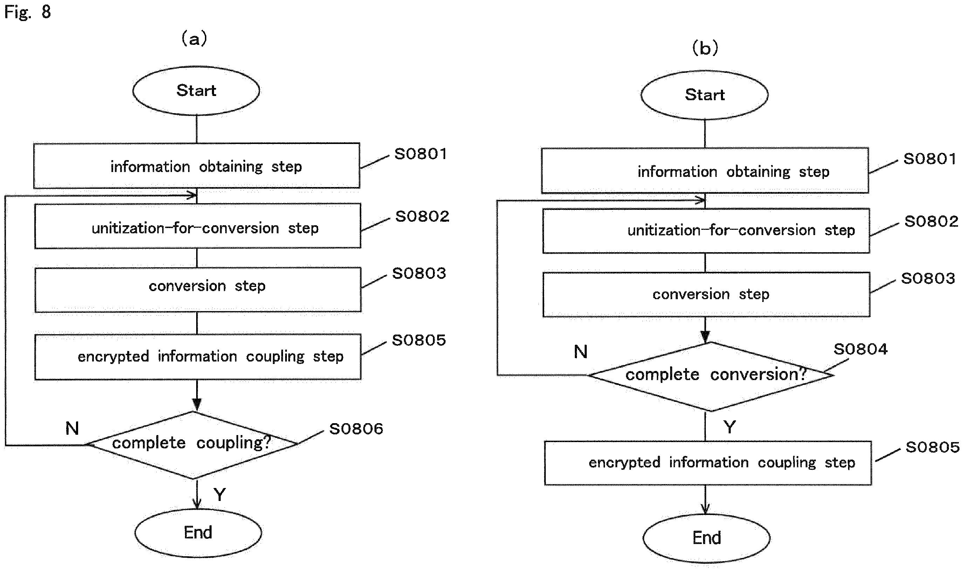

Fig. 8 is a flowchart illustrating an example of a flow of the processing in the encrypting device of this embodiment. There are two flows (a) and (b) of the processing in this embodiment, and they will be described in order. The flow (a) includes an information obtaining step (S0801), a unitization-for-conversion step (S0802), a conversion step (S0803), an encrypted information coupling step (S0805), and a determination step (S0806) on whether all the coupling have been completed. Moreover, the flow (b) includes the information obtaining step (S0801), the unitization-for-conversion step (S0802), the conversion step (S0803), the determination step (S0804) on whether all the conversions have been completed, and the encrypted information coupling step (S0805). By using this view, those specific to this embodiment in the flow of each processing in this device will be described, while the other parts are similar to those in the description of the embodiment 1.

The "encrypted information coupling step" is a stage coupling the converted unitized information obtained in the conversion step into encrypted information. In the flow (a), it is sequentially coupled as the encrypted information each time the converted unitized information is received, and this is repeated until all the converted unitized information has been received. In the flow (b), all the coupling are executed at the stage where all the conversions have been already finished.

In either of (a) and (b), the mode of coupling is preferably such that the coupling is executed in the same order as the order of unitization to 16 bytes in the unitization-for-conversion unit. Then, the processing for combining is facilitated.

In this manner, the converted unitized information is coupled into the encrypted information so as to be a target of transmission/reception as a single piece of the information.

### Embodiment 3

### <Outline of this embodiment>

An encrypting device according to this embodiment is an encrypting device in which a conversion unit further includes a combined converting means in addition to the feature of the embodiment 1 or 2.

Hereinafter, a functional configuration, a hardware configuration, and a flow of processing will be described in order. In the following description, the description is made assuming that a future is added to the configuration of the embodiment 1. However, it is within the scope of this embodiment if the feature of the embodiment 2 or 3 is included.

### <Functional configuration>

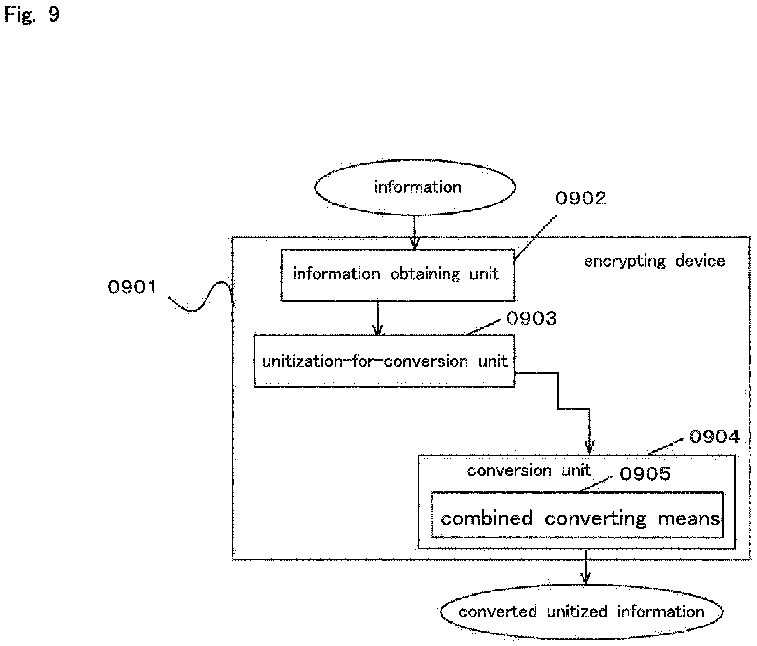

Fig. 9 is a view illustrating the functional configuration of the encrypting device according to this embodiment. In an encrypting device (0901) in this embodiment, an information obtaining unit (0902), a unitization-for-conversion unit (0903), and a conversion unit (0904) are provided similarly to the embodiment 1. Their functional configurations are similar to those in the embodiment 1. Hereinafter, a function of a combined converting means (0905) added in this embodiment will be described.

The conversion unit of the encrypting device according to this embodiment includes a combined converting means. The "combined converting means" is a function of executing combined conversion in which forward conversion and inverse conversion for the same conversion are composed with respect to adjacent original conversion.

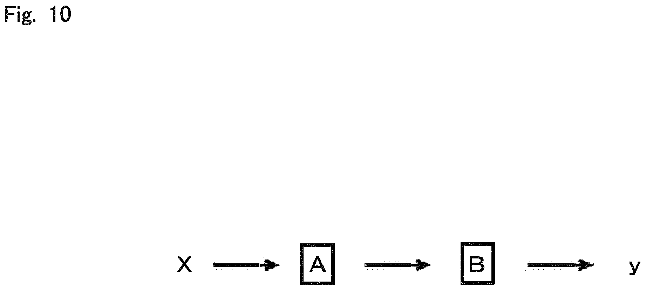

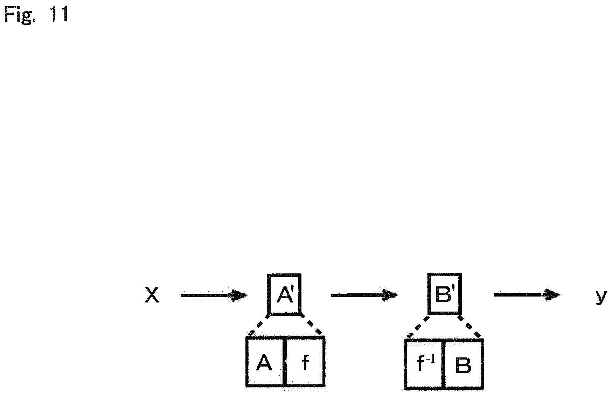

Fig. 10 is a view illustrating a flow of a conventional combined conversion. Fig. 11 is a view illustrating a detail of the combined conversion in this embodiment. Here, an example of this embodiment will be described presupposing an aspect in which the conversion by multiplication processing is executed twice in the conversion unit.

Fig. 10 is a flow of a case in which the obtained information x is converted by a first function A and a second function B. The case in which A is "tripling of an input value" and B is "doubling of an input value" is used as an example. For example, when the obtained information x is "3", it becomes "9" by applying the function A and becomes "18" by applying the function B. Moreover, when the obtained information x is "1", it becomes "3" by applying the function A and becomes "6" by applying the function B. Furthermore, when the obtained information x is "2", it becomes "6" by applying the function A and becomes "12" by applying the function B.

Meanwhile, Fig. 11 illustrates a detail of the combined conversion in this embodiment. If the case in which A is "tripling of an input value" and B is "doubling of an input value" is similarly used as an example, the function used in the conversion is "A' " obtained by multiplying an arbitrary function with A and "B'" obtained by multiplying an inverse function of the arbitrary function multiplied with the aforementioned A with B. On this premise, when the "arbitrary function" is "2", for example, A' becomes "sextupling of the input value", and B' becomes "multiplying of the input value by one". On this premise, when the obtained information x is "3", for example, it becomes "18" by applying the function A' and becomes "18" by applying the function B'. Moreover, when the obtained information x is "1", it becomes "6" by applying the function A' and becomes "6" by applying the function B'. Furthermore, when the obtained information x is "2", it becomes "12" by applying the function A' and becomes "12" by applying the function B' . By configuring as above, specification of the details of A and B becomes further difficult as compared with the conventional combined conversion.

These are realized by the operation processing by the CPU.

As a result, a mode of encryption is made further complicated, which makes decryption by a third party difficult. Particularly, this is effective not on a method of decryption by estimating a function of encryption from combination of information to be encrypted and the encrypted information but on a method of decryption by direct specification of details of the function.

### <Hardware configuration>

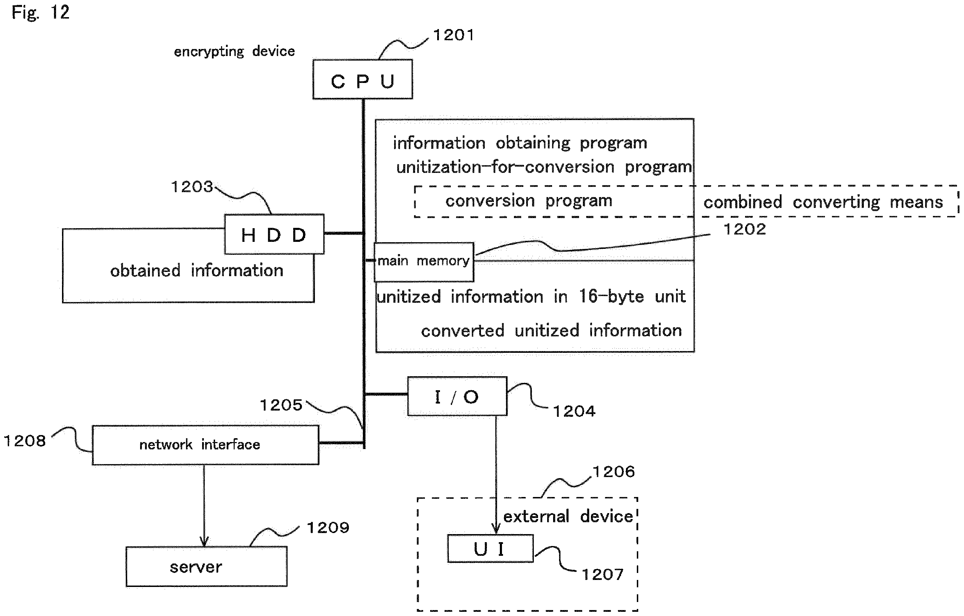

Fig. 12 is a schematic view illustrating an example of a configuration of the encrypting device in which each of the aforementioned functional constituent element is realized as hardware. The encrypting device includes a "CPU (Central Processing Unit)" (1201), a "main memory" (1202), an "HDD" (1203), an "I/O (input/output)" (1204), a "system bus" (1205) and a "network interface" (1208) conducting transmission/reception of information with a server (1209), and an "external device" (1206) includes an "UI" (1207). The programs stored in the "main memory" in this embodiment are an information obtaining program, a unitization-for-conversion program, and a conversion program. In addition, the conversion program includes a combined converting means.

By using these figures, those specific to this embodiment among the hardware components in each processing in this device will be described, while the other parts are similar to those in the description of the embodiment 1.

When the 16-byte unitized information unitized for conversion by the encrypting device is encrypted by the operation processing of the "CPU", processing is executed by executing combined conversion of combining the forward conversion and inverse conversion for the same conversion with the adjacent original conversion. The converted unitized information obtained by this processing is stored in the "main memory".

The mode of encryption is made further complicated by the encrypted information generating method as above, which makes decryption by a third party more difficult. Particularly, this is effective not on the method of decryption by estimating a function of encryption from combination of information to be encrypted and the encrypted information but on the method of decryption by direct specification of details of the function.

### <Flow of processing>

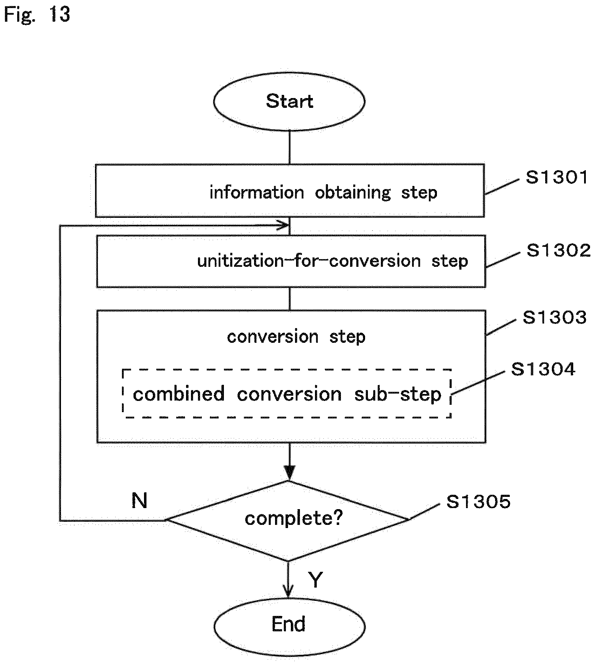

Fig. 13 is a flowchart illustrating an example of a flow of the processing in the encrypting device of this embodiment. The flow includes an information obtaining step (S1301), a unitization-for-conversion step (S1302), a conversion step (S1303), a combined conversion sub-step (S1304), and a determination step (S1305) on whether all the coupling have been completed. By using this view, those specific to this embodiment in the flow of each processing in this device will be described, while the other parts are similar to those in the description of the embodiment 1.

The "combined conversion sub-step" is a stage of executing the combined conversion in which the forward conversion and the inverse conversion for the same conversion are combined with the adjacent original conversion. The details of the combined conversion are as described in the functional configuration of this embodiment. They are realized by the operation processing by the CPU.

The mode of encryption is made further complicated by the encrypted information generating method as above, which makes decryption by a third party more difficult. Particularly, this is effective not on the method of decryption by estimating a function of encryption from combination of information to be encrypted and the encrypted information but on the method of decryption by direct specification of details of the function.

### Embodiment 4

### <Outline of this embodiment>

An encrypting device according to this embodiment is an encrypting device in which a conversion unit further includes an exclusive OR processing means in addition to the feature of the embodiment 3.

Hereinafter, a functional configuration, a hardware configuration, and a flow of processing will be described in order.

### <Functional configuration>

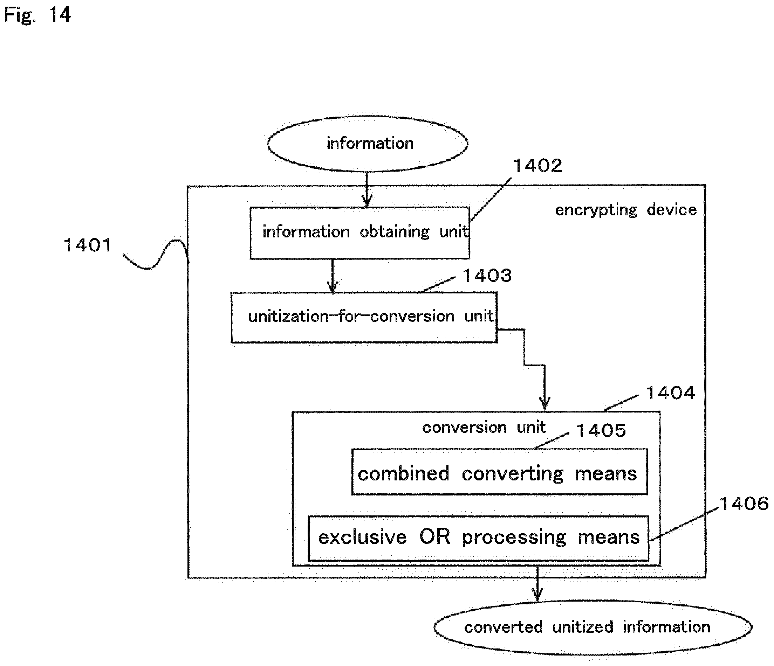

Fig. 14 is a view illustrating the functional configuration of the encrypting device according to this embodiment. In an encrypting device (1401) in this embodiment, an information obtaining unit (1402), a unitization-for-conversion unit (1403), a conversion unit (1404), and a combined converting means (1405) are provided similarly to the embodiment 3. Their functional configurations are similar to those in the embodiment 3. Hereinafter, a function of an exclusive OR processing means (1406) added in this embodiment will be described.

The conversion unit includes an exclusive OR processing means. The "exclusive OR processing means" is a function in which: exclusive OR processing is executed on two or more of forward conversion results obtained as results of operations of a front stage combining the forward conversion with input values; and then the same number of conversion processing by a rear stage as the input values is obtained in which the inverse conversion is combined. The "exclusive OR processing" means an addition and subtraction processing in the residue field modulo 2 with respect to each bit of the numerical value expressed in binary number.

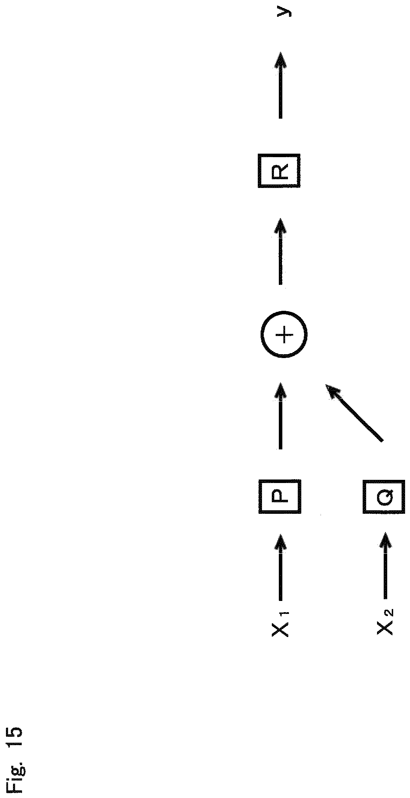

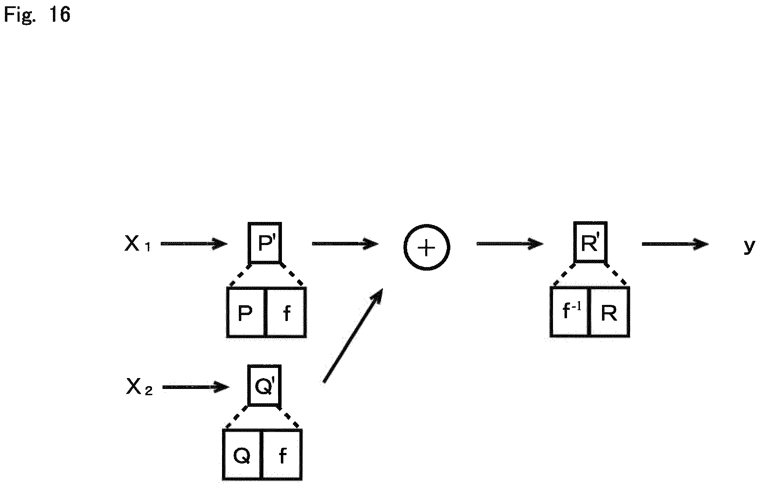

Fig. 15 is a view illustrating a detail of a many-to-one conversion interposing a normal XOR operation. Fig. 16 is a view illustrating a detail of the many-to-one conversion interposing the XOR operation in this embodiment.

Fig. 15 is a detail of the many-to-one conversion interposing the normal XOR operation. As an example of the conversion, the case in which P is "doubling of an input value", Q is "multiplying of an input value by one" and R is "quadrupling of an input value" is used in Fig. 15. For example, when x₁ is "4" and x₂ is "3" among the obtained information, x₁ becomes "8" by applying the function P and x₂ becomes "3" by applying the function Q. Then, the function R is applied to the sum "11" and thereby a value "44" is obtained. Next, when x₁ is "1" and x₂ is "2" among the obtained information, x₁ becomes "2" by applying the function P and x₂ becomes "2" by applying the function Q. Then, the function R is applied to the sum "4" and thereby a value "16" is obtained.

Meanwhile, Fig. 16 illustrates a detail of the many-to-one conversion interposing the XOR operation in this embodiment. If the case in which P is "doubling of an input value", Q is "multiplying of an input value by one" and R is "quadrupling of an input value" is similarly used as an example, the function used in the conversion is "P'" and "Q'" obtained by multiplying an arbitrary common function with P and Q, and "R'" obtained by multiplying an inverse function of the arbitrary common function multiplied with the aforementioned P and Q with R. On this premise, when the "arbitrary function" is "2", for example, P' becomes "quadrupling of the input value", Q' becomes "doubling of the input value", and R' becomes "doubling of the input value". On this premise, when x₁ is "4" and x₂ is "3" among the obtained information, for example, x₁ becomes "16" by applying the function P' and X₂ becomes "6" by applying the function Q'. Then, the function R' is applied to the sum "22" and thereby a value "44" is obtained. Next, when x₁ is "1" and x₂ is "2" among the obtained information, x₁ becomes "4" by applying the function P' and X₂ becomes "4" by applying the function Q'. Then, the function R' is applied to the sum "8" and thereby a value "16" is obtained. By configuring as above, specification of the details of P, Q, R becomes further difficult as compared with the many-to-one conversion interposing the normal XOR operation.

The mode of encryption is made further complicated by the encrypted information generating method as above, which makes decryption by a third party more difficult. Particularly, this is effective not on the method of decryption by estimating a function of encryption from combination of information to be encrypted and the encrypted information but on the method of decryption by direct specification of the details of the function.

### <Hardware configuration>

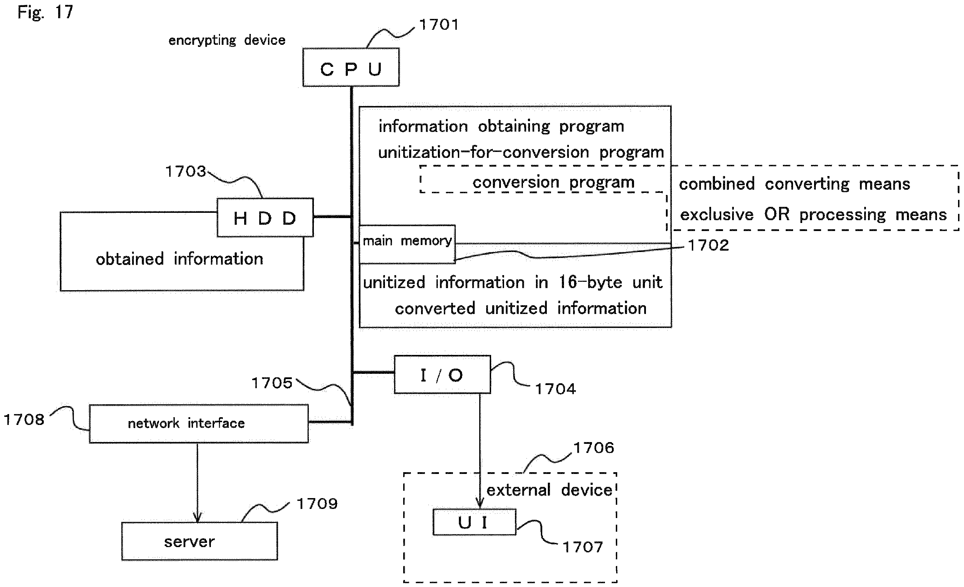

Fig. 17 is a schematic view illustrating an example of a configuration of the encrypting device in which each of the aforementioned functional constituent element is realized as hardware. The encrypting device includes a "CPU (Central Processing Unit)" (1701), a "main memory" (1702), an "HDD" (1703), an "I/O (input/output)" (1704), a "system bus" (1705) and a "network interface" (1708) conducting transmission/reception of information with a server (1709), and an "external device" (1706) includes an "UI" (1707). The programs stored in the "main memory" in this embodiment are an information obtaining program, a unitization-for-conversion program, and a conversion program. In addition, the conversion program includes a combined converting means and an exclusive OR processing means.

By using these figures, those specific to this embodiment among the hardware components in each processing in this device will be described, while the other parts are similar to those in the description of the embodiment 3.

When the 16-byte unitized information unitized for conversion by the encrypting device is encrypted by the operation processing of the "CPU", a conversion processing is executed, in which: exclusive OR processing is executed on two or more of forward conversion results obtained as results of operations of a front stage combining the forward conversion with input values; and then the same number of conversion processing by a rear stage as the input values is obtained in which the inverse conversion is combined. The converted unitized information obtained by this processing is stored in the "main memory".

The mode of encryption is made further complicated by the encrypted information generating method as above, which makes decryption by a third party more difficult. Particularly, this is effective not on the method of decryption by estimating a function of encryption from combination of information to be encrypted and the encrypted information but on the method of decryption by direct specification of details of the function.

### <Flow of processing>

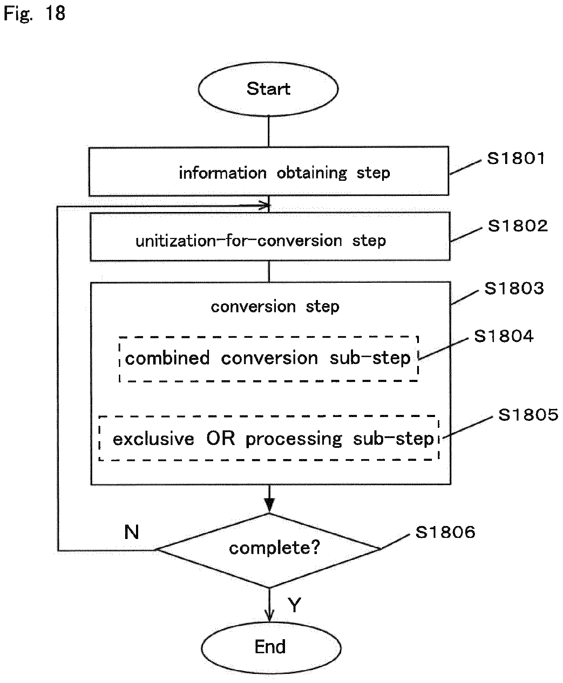

Fig. 18 is a flowchart illustrating an example of a flow of the processing in the encrypting device of this embodiment. The flow includes an information obtaining step (S1801), a unitization-for-conversion step (S1802), a conversion step (S1803), a combined conversion sub-step (S1804), an exclusive OR processing sub-step (S1805) and a determination step (S1806) on whether all the coupling have been completed. By using this view, those specific to the embodiment 4 in the flow of each processing in this device will be described, while the other parts are similar to those in the description of the embodiment 3.

The "exclusive OR processing conversion sub-step" is a stage of executing a conversion processing, in which: exclusive OR processing is executed on two or more of forward conversion results obtained as results of operations of a front stage combining the forward conversion with input values; and then the same number of conversion processing by a rear stage as the input values is obtained in which the inverse conversion is combined. The "exclusive OR processing" means an addition and subtraction processing in the residue field modulo 2 with respect to each bit of the numerical value expressed in binary number

The mode of encryption is made further complicated by the encrypted information generating method as above, which makes decryption by a third party more difficult. Particularly, this is effective not on the method of decryption by estimating a function of encryption from combination of information to be encrypted and the encrypted information but on the method of decryption by direct specification of details of the function.

### Embodiment 5

### <Outline of this embodiment>

An encrypting device according to this embodiment is an encrypting device in which a conversion unit further includes a converting means using a conversion table means in addition to the features of the embodiments 1-4.

Hereinafter, a functional configuration, a hardware configuration, and a flow of processing will be described in order. In the following description, the description is made assuming that a future is added to the configuration of the embodiment 1. However, it is within the scope of this embodiment if the features of the embodiments 2-4 are included.

### <Functional configuration>

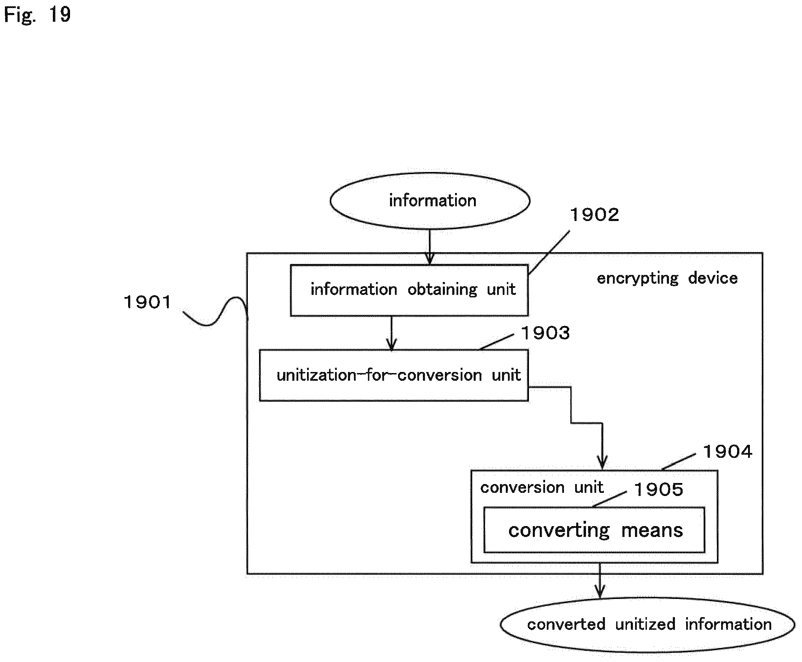

Fig. 19 is a view illustrating the functional configuration of the encrypting device according to this embodiment. In an encrypting device (1901) in this embodiment, an information obtaining unit (1902), a unitization-for-conversion unit (1903), and a conversion unit (1904) are provided similarly to the embodiment 1. Their functional configurations are similar to those in the embodiment 1. Hereinafter, a function of a converting means using a conversion table (1905) added in this embodiment will be described.

The conversion unit includes a converting means. The "converting means" is a function of executing conversion by using a conversion table determining a relationship between a conversion input and a conversion output which cannot be expressed in a linear expression. Conversion without regularity can be realized by using the conversion table. This is realized by processing of reading out of the conversion table in the CPU.

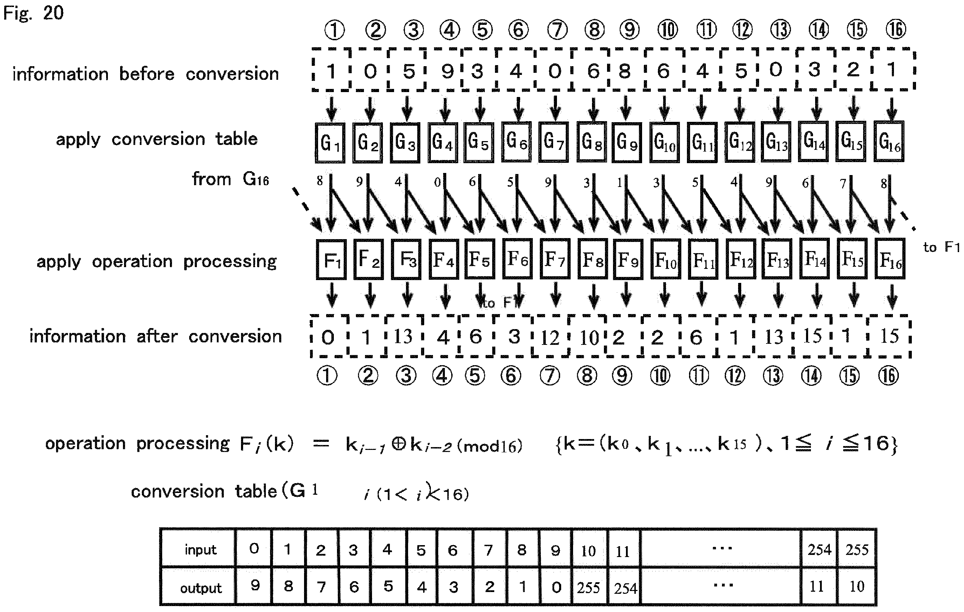

Fig. 20 is a view illustrating a detail of the conversion using the conversion table. The encrypting device according to the present invention is for conversion in the 16 bytes unit, and here, a 16-byte value selected as appropriate is used in explanation as an example for convenience of the explanation of this conversion mode. Moreover, these values are expressed in the decimal number.

Circled numbers from 1 to 16 are byte position numbers for identifying each byte data constituting the unitized information. In Fig. 20, information of "0 to 9" as byte data of the unitized information is present as information before conversion. Regarding the conversion table, there are G1 to G16 conversion tables corresponding to byte positions. The unitized information is converted by combining the conversion based on "correspondence between conversion input value and conversion output value" determined by this conversion table and operations determined by F1 to F16 corresponding to the byte positions. It should be noted that each of the tables G1 to G16 can be determined independently, respectively, but they use a table with the same contents as those in the conversion table G1 for convenience in this example.

Conversion processing from the byte positions 1 to 4 will be described in order on the basis of the above. It should be noted that the conversion result by the conversion table of the byte position 16 is also referred to in the conversion processing of the byte position 1. At a stage of applying the conversion table in the figure, information "1" is converted to information "8" by applying the function conversion table G1. Subsequently, information "0" is converted to information "9" by applying the conversion table G2. Subsequently, information "5" is converted to information "4" by applying the conversion table G3. Subsequently, information "9" is converted to information "0" by applying the conversion table G4. Lastly, information "1" at the byte position 16 is converted to information "8" is executed by applying the conversion table G16.

Then, the operation processing is executed by combining the conversion results after application of the conversion table above at a stage of the operation processing. In operation processing F1, "0" is calculated by XOR operation of the conversion information "8" by the conversion table G16 and the conversion information "8" by the conversion table G1. In operation processing F2, "1" is calculated by XOR operation of the conversion information "8" by the conversion table G1 and the conversion information "9" by the conversion table G2. In operation processing F3, "13" is calculated by XOR operation of the conversion information "9" by the conversion table G2 and the conversion information "4" by the conversion table G3. In operation processing F4, "4" is calculated by XOR operation of the conversion information "4" by the conversion table G3 and the conversion information "0" by the conversion table G4.

In Fig. 20, the description is made by using the example in which 1 type of the relatively simple conversion table and the operation processing Gi, Fi (1 ≤ i ≤ 16) are applied only once, but the details of the present invention are not limited to that, and complicated configuration may be achieved by using a plurality of more irregular conversion tables, by using the operation processing with stronger dependency between the constituent bytes, and by repeatedly applying the similar conversion processing.

As a result, the encryption in the 16-byte unit without regularity is made possible, and decryption is made further difficult.

### <Hardware configuration>

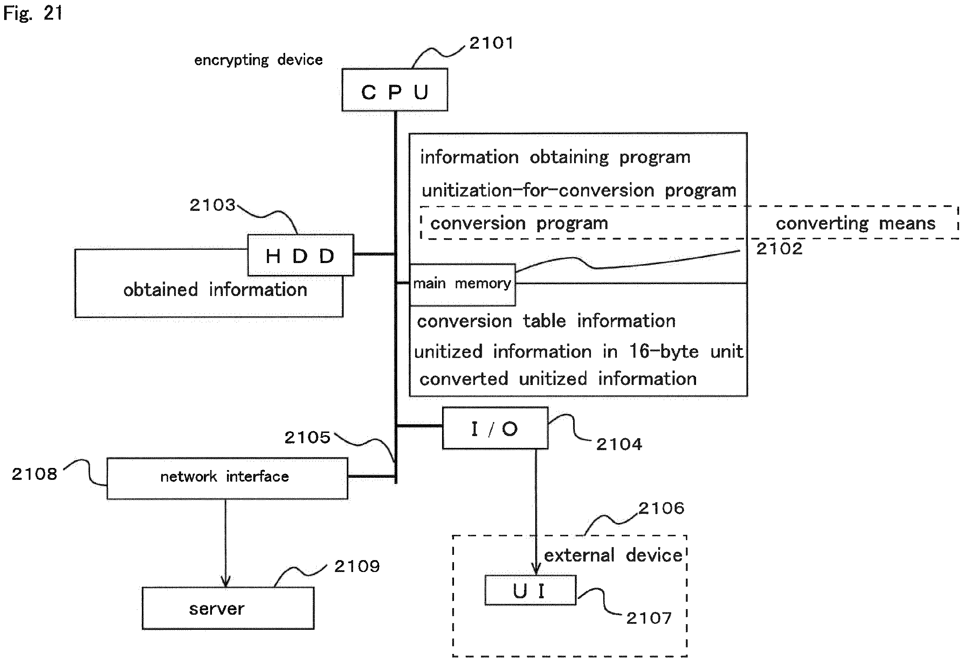

Fig. 21 is a schematic view illustrating an example of a configuration of the encrypting device in which each of the aforementioned functional constituent element is realized as hardware. The encrypting device includes a "CPU (Central Processing Unit)" (2101), a "main memory" (2102), an "HDD" (2103), an "I/O (input/output)" (2104), a "system bus" (2105) and a "network interface" (2108) conducting transmission/reception of information with a server (2109), and an "external device" (2106) includes an "UI" (2107). The programs stored in the "main memory" in this embodiment are an information obtaining program, a unitization-for-conversion program, and a conversion program. In addition, the conversion program includes a converting means.

By using these figures, those specific to this embodiment among the hardware components in each processing in this device will be described, while the other parts are similar to those in the description of the embodiment 1.

When the 16-byte unitized information unitized for conversion by the encrypting device is encrypted by the processing in the "CPU", processing of generating the converted unitized information is executed by executing conversion using a conversion table which is a table determining a relationship between a conversion input and a conversion output which cannot be expressed in a linear expression. The converted unitized information obtained by this processing is stored in the "main memory".

As a result, the encryption without regularity is made possible, and decryption is made further difficult.

### <Flow of processing>

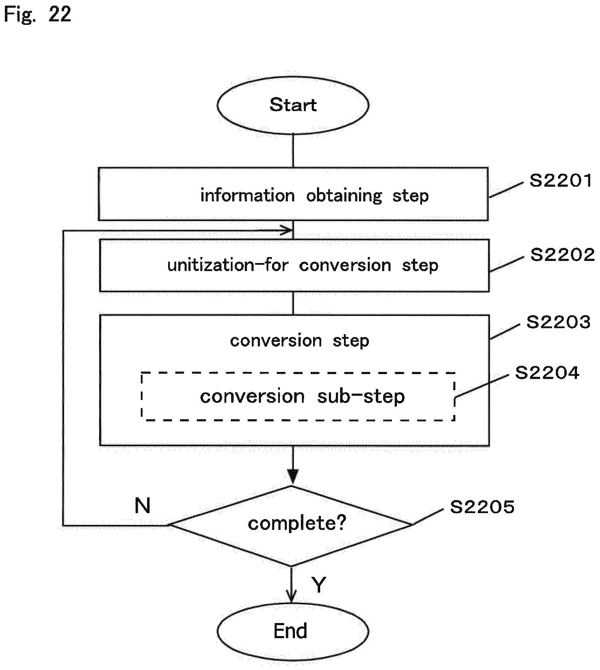

Fig. 22 is a flowchart illustrating an example of a flow of the processing in the encrypting device of this embodiment. The flow includes an information obtaining step (S2201), a unitization-for-conversion step (S2202), a conversion step (S2203), a conversion sub-step (S2204), and a determination step (S2205) on whether all the coupling have been completed. By using this view, those specific to this embodiment in the flow of each processing in this device will be described, while the other parts are similar to those in the description of the embodiment 1.

The conversion step includes a conversion sub-step. The "conversion sub-step" is a stage of executing conversion using a conversion table which is a table determining a relationship between the conversion input and the conversion output which cannot be expressed in a linear expression. Conversion without regularity can be realized by using the conversion table. This is realized by processing of reading out of the conversion table in the CPU.

As a result, the encryption without regularity is made possible, and decryption is made further difficult.

### Embodiment 6

### <Outline of this embodiment>

An encrypting device according to this embodiment is an encrypting device in which a conversion unit further includes a "table applying" means in addition to the feature of the embodiment 5.

Hereinafter, a functional configuration, a hardware configuration, and a flow of processing will be described in order.

### <Functional configuration>

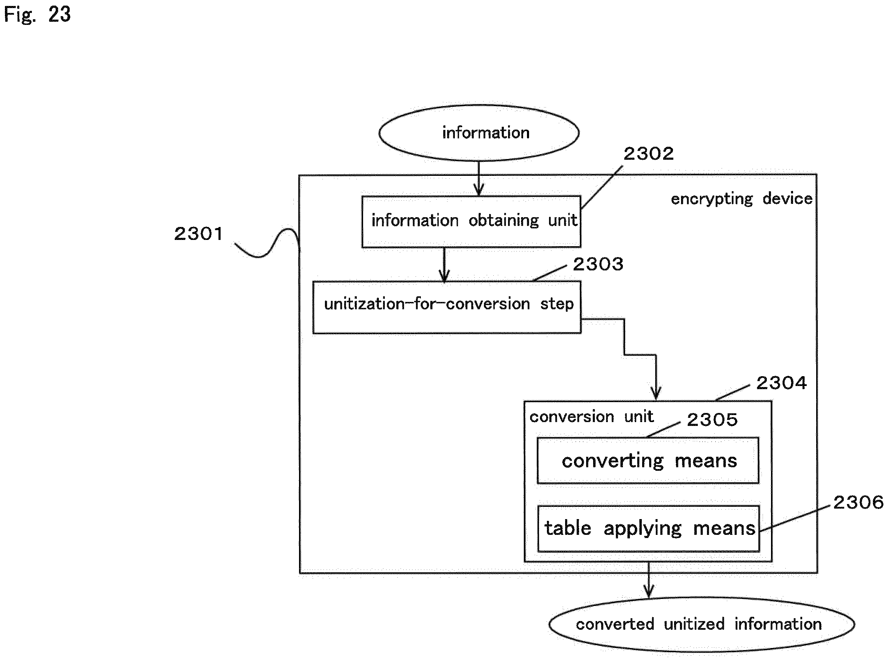

Fig. 23 is a view illustrating the functional configuration of the encrypting device according to this embodiment. In an encrypting device (2301) in this embodiment, an information obtaining unit (2302), a unitization-for-conversion unit (2303), and a conversion unit (2304) are provided similarly to the embodiment 5, and the conversion unit includes a converting means using a conversion table (2305) . Their functional configurations are similar to those in the embodiment 5. Hereinafter, a function of a "table applying means" (2306) added in this embodiment will be described.

The conversion unit includes a table applying means. The "table applying means" is a function of applying the conversion table only to a part of a plurality of conversion processing which should be executed in the conversion unit. By applying the processing by the conversion table to a part of the entirety, the conversion tables to be prepared can be reduced, and irregular conversion can be used in any of the conversion processing so that decryption by a third party is made difficult. This is realized by the CPU.

As a result, a usage capacity in holding of the number of tables can be reduced.

### <Hardware configuration>

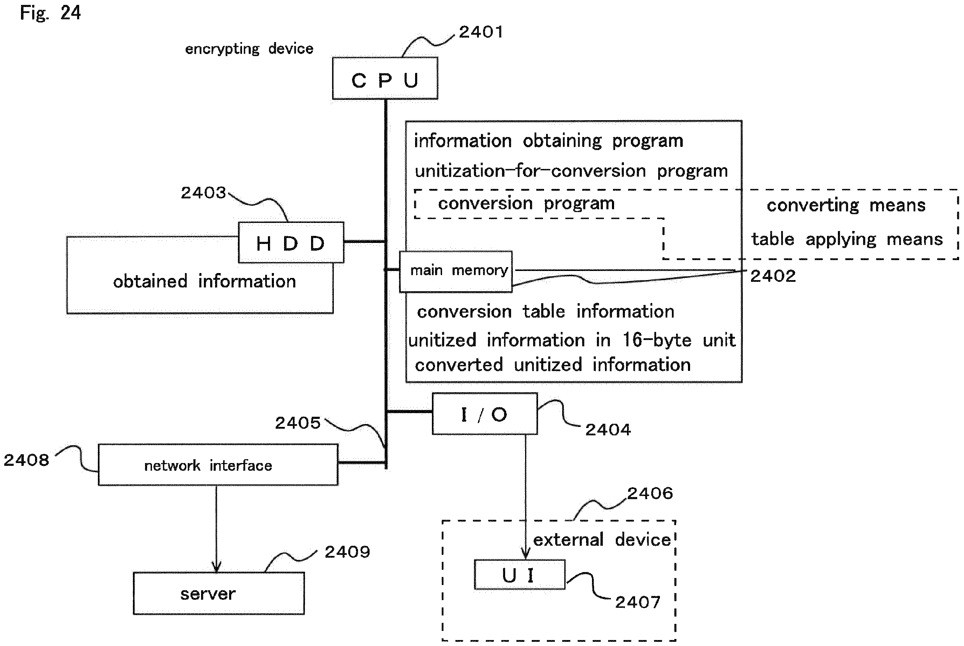

Fig. 24 is a schematic view illustrating an example of a configuration of the encrypting device in which each of the aforementioned functional constituent element realized as hardware. The encrypting device includes a "CPU (Central Processing Unit)" (2401), a "main memory" (2402), an "HDD" (2403), an "I/O (input/output)" (2404), a "system bus" (2405) and a "network interface" (2408) conducting transmission/reception of information with a server (2409), and an "external device" (2406) includes an "UI" (2407). The programs stored in the "main memory" in this embodiment are an information obtaining program, a unitization-for-conversion program, and a conversion program. In addition, the conversion program includes a converting means using a conversion table and a "table applying means".

By using these figures, those specific to this embodiment among the hardware components in each processing in this device will be described, while the other parts are similar to those in the description of the embodiment 5.

When encryption is executed by the operation processing of the "CPU" of the encrypting device according to the embodiment 5, the converted unitized information is generated by applying the conversion table only to a part of a plurality of conversion processing which should be executed. The converted unitized information obtained by this processing is stored in the "main memory".

As a result, a usage capacity in holding of the number of tables can be reduced.

### <Flow of processing>

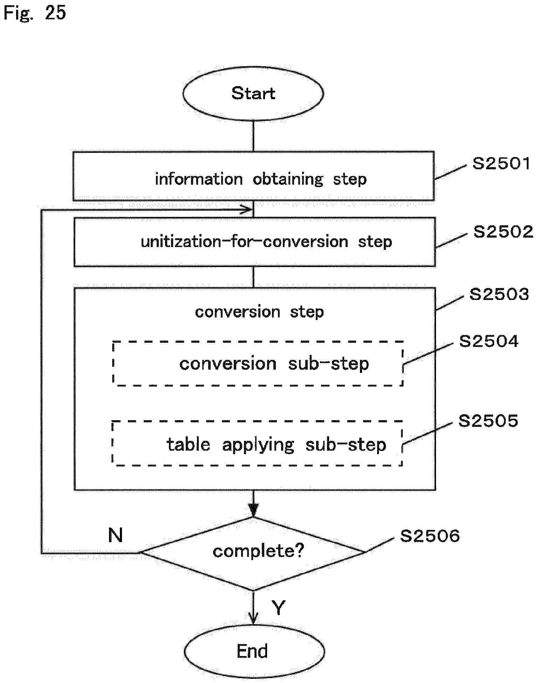

Fig. 25 is a flowchart illustrating an example of a flow of the processing in the encrypting device of this embodiment. The flow includes an information obtaining step (S2501), a unitization-for-conversion step (S2502), a conversion step (S2503), a conversion sub-step using a conversion table (S2504), a "table applying sub-step" (S2505), and a determination step (S2506) on whether all the coupling have been completed. By using this view, those specific to this embodiment in the flow of each processing in this device will be described, while the other parts are similar to those in the description of the embodiment 5.

The "table applying sub-step" is a stage of applying the conversion table only to a part of a plurality of conversion processing which should be executed in the conversion step. By applying the conversion processing by the conversion table to a part of the entirety, the conversion tables to be prepared can be reduced, and there remains irregular conversion in any of the conversion processing so that decryption by a third party is made difficult. This is realized by the CPU.

As a result, a usage capacity in holding of the number of tables can be reduced.

### Embodiment 7

### <Outline of this embodiment>

An encrypting device according to this embodiment is an encrypting device in which a conversion unit further includes an "applied table controlling means" in addition to the feature of the embodiment 5 or 6.

Hereinafter, a functional configuration, a hardware configuration, and a flow of processing will be described in order. In the following description, the description is made assuming that a future is added to the configuration of the embodiment 5. However, it is within the scope of this embodiment if the feature of the embodiment 6 is included.

### <Functional configuration>

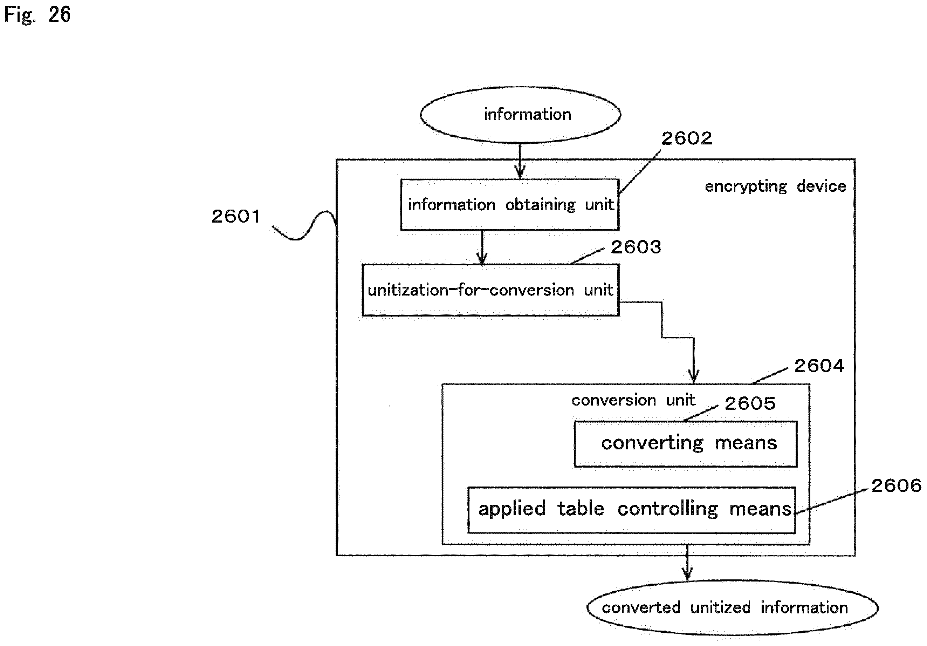

Fig. 26 is a view illustrating the functional configuration of the encrypting device according to this embodiment. In an encrypting device (2601) in this embodiment, an information obtaining unit (2602), a unitization-for-conversion unit (2603), and a conversion unit (2604) are provided similarly to the embodiment 5, and the conversion unit includes a converting means using a conversion table (2605). Their functional configurations are similar to those in the embodiment 5. Hereinafter, a function of an "applied table controlling means" (2606) added in this embodiment will be described.

The conversion unit includes an applied table controlling means. The "applied table controlling means" is a function of dynamically controlling the table which should be applied to a plurality of processing stages.

As a result, since the function of encryption is different in each case, complexity of the encryption result can be ensured even with the use of few tables, thereby decryption by a third party is made more difficult.

### <Hardware configuration>

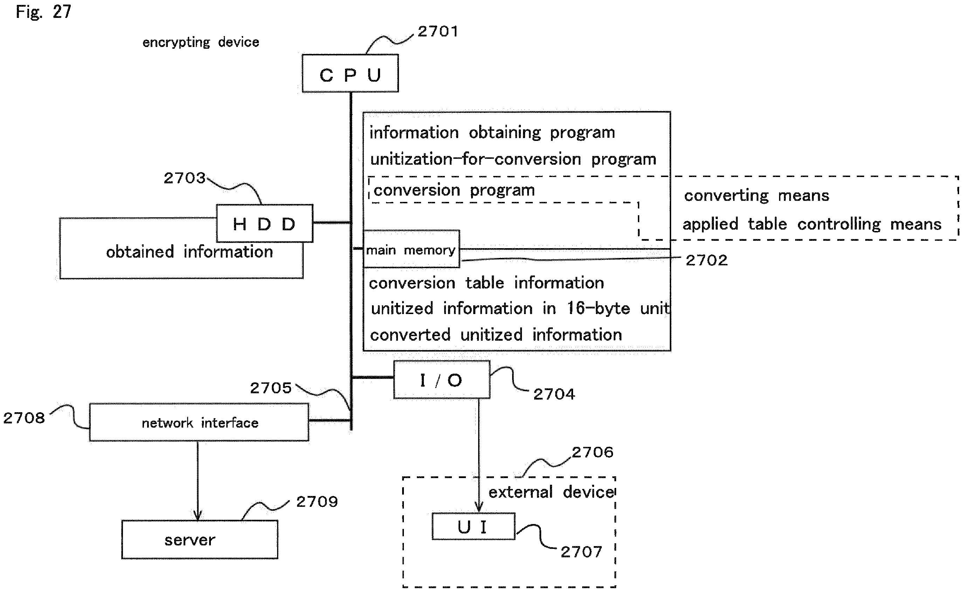

Fig. 27 is a schematic view illustrating an example of a configuration of the encrypting device in which each of the aforementioned functional constituent element is realized as hardware. The encrypting device includes a "CPU (Central Processing Unit)" (2701), a "main memory" (2702), an "HDD" (2703), an "I/O (input/output)" (2704), a "system bus" (2705) and a "network interface" (2708) conducting transmission/reception of information with a server (2709), and an "external device" (2706) includes an "UI" (2707). The programs stored in the "main memory" in this embodiment are an information obtaining program, a unitization-for-conversion program, and a conversion program. In addition, the conversion program includes a converting means using a conversion table and an "applied table controlling means".

By using these figures, those specific to this embodiment among the hardware components in each processing in this device will be described, while the other parts are similar to those in the description of the embodiment 5.

The conversion tables for a plurality of processing stages is present. The table which should be applied to a plurality of processing stages is dynamically controlled, and the table determined to be applied is used to generate converted unitized information. The converted unitized information obtained by this processing is stored in the "main memory".

As a result, since the function of encryption is different in each case, complexity of the encryption result can be ensured even with the use of few tables, thereby decryption by a third party is made more difficult.

### <Flow of processing>

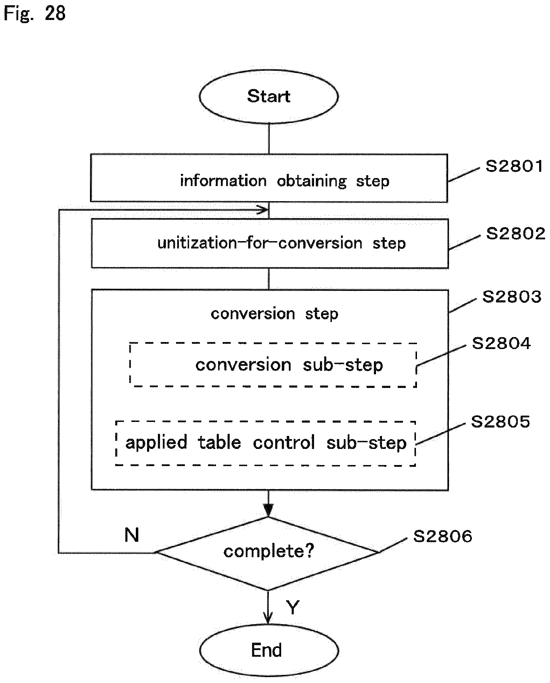

Fig. 28 is a flowchart illustrating an example of a flow of the processing in the encrypting device of this embodiment. The flow includes an information obtaining step (S2801), a unitization-for-conversion step (S2802), a conversion step (S2803), and the conversion step includes a conversion sub-step using a conversion table (S2804), an "applied table control sub-step (S2805)", and a determination step (S2806) on whether all the coupling have been completed. By using this view, those specific to this embodiment in the flow of each processing in this device will be described, while the other parts are similar to those in the description of the embodiment 5.

The "applied table control sub-step" is a stage of dynamically controlling the table which should be applied to a plurality of processing stages.

As a result, the function of encryption is different in each case, and complexity of the encryption result can be ensured even with the use of few tables, thereby decryption by a third party is made more difficult.

### Embodiment 8

### <Outline of this embodiment>

An encrypting device according to this embodiment is an encrypting device in which a conversion unit further includes an "applied position controlling means" in addition to the features of the embodiments 5-7.

Hereinafter, a functional configuration, a hardware configuration, and a flow of processing will be described in order. In the following description, the description is made assuming that a future is added to the configuration of the embodiment 5. However, it is within the scope of this embodiment if the feature of the embodiment 6 or 7 is included.

### <Functional configuration>

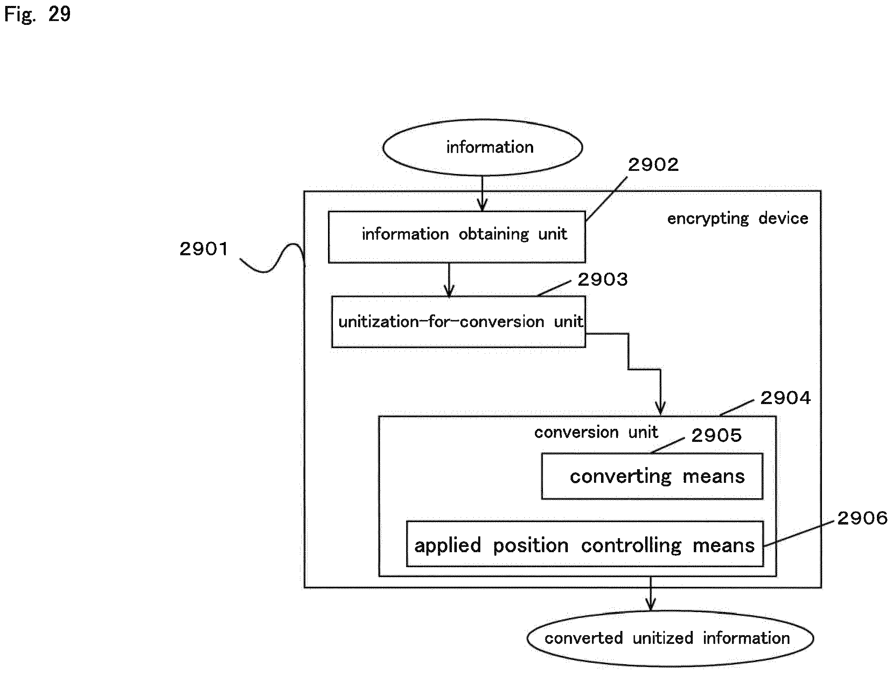

Fig. 29 is a view illustrating the functional configuration of the encrypting device according to this embodiment. In an encrypting device (2901) in this embodiment, an information obtaining unit (2902), a unitization-for-conversion unit (2903), and a conversion unit (2904) are provided similarly to the embodiment 5, and the conversion unit includes a converting means using a conversion table (2905). Their functional configurations are similar to those in the embodiment 5. Hereinafter, a function of an "applied position controlling means" (2906) added in this embodiment will be described.

The conversion unit includes an applied position controlling means. The "applied position controlling means" is a function of dynamically controlling an applied position of the table which should be applied to the input value. The input value herein is generally key information.

As a result, the table applied can be changed in each conversion, and complexity of the encryption result can be ensured even with the use of few tables, thereby decryption by a third party is made more difficult.

### <Hardware configuration>

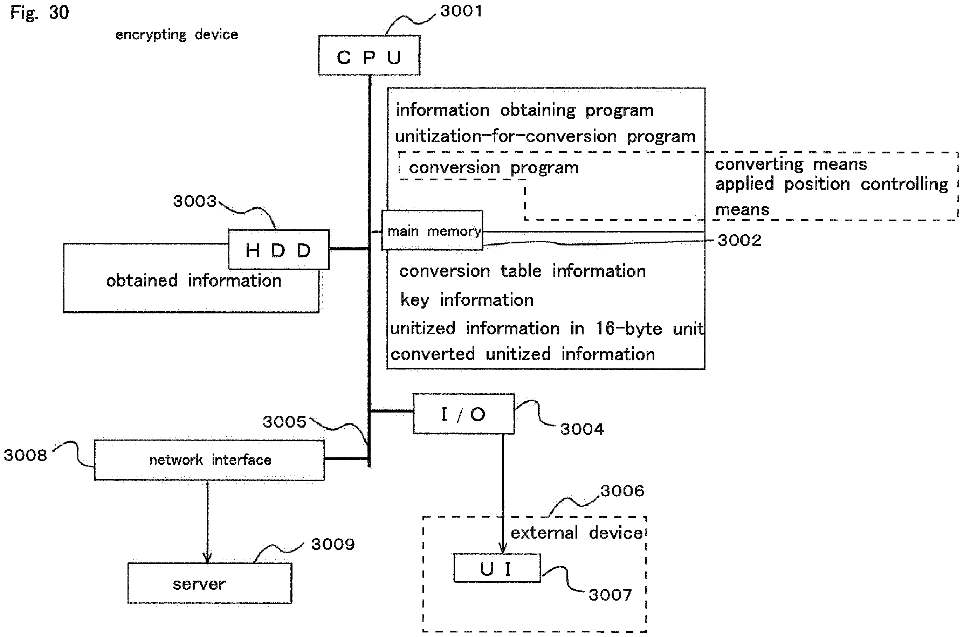

Fig. 30 is a schematic view illustrating an example of a configuration of the encrypting device in which each of the aforementioned functional constituent element is realized as hardware. The encrypting device includes a "CPU (Central Processing Unit)" (3001), a "main memory" (3002), an "HDD" (3003), an "I/O (input/output)" (3004), a "system bus" (3005) and a "network interface" (3008) conducting transmission/reception of information with a server (3009), and an "external device" (3006) includes an "UI" (3007). The programs stored in the "main memory" in this embodiment are an information obtaining program, a unitization-for-conversion program, and a conversion program. In addition, the conversion program includes a converting means using a conversion table and an "applied position controlling means".

By using these figures, those specific to this embodiment among the hardware components in each processing in this device will be described, while the other parts are similar to those in the description of the embodiment 5.

A conversion table with a plurality of processing stages is present, the applied position of the table which should be applied to an input value is dynamically controlled, and the table determined to be applied is used to generate converted unitized information. The converted unitized information obtained by this processing is stored in the "main memory".

As a result, since the table applied can be changed in each conversion, complexity of the encryption result can be ensured even with the use of few tables, thereby decryption by a third party is made more difficult.

### <Flow of processing>

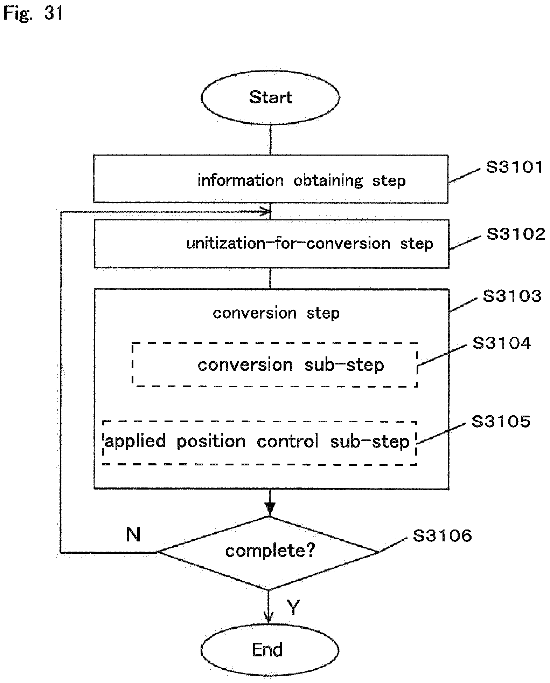

Fig. 31 is a flowchart illustrating an example of a flow of the processing in the encrypting device of this embodiment. The flow includes an information obtaining step (S3101), a unitization-for-conversion step (S3102), a conversion step (S3103), and the conversion step includes a conversion sub-step using a conversion table (S3104), an "applied position control sub-step (S3105)", and a determination step (S3106) on whether all the coupling have been completed. By using this view, those specific to this embodiment in the flow of each processing in this device will be described, while the other parts are similar to those in the description of the embodiment 5.

The "applied position control sub-step" is a stage of dynamically controlling the applied position which should be applied to an input value. The input value herein is generally key information.

As a result, the table applied can be changed in each conversion, and the function of encryption is different in each case, thereby decryption by a third party is made more difficult.

### Embodiment 9

### <Outline of this embodiment>

A device according to this embodiment is a decrypting device for decrypting the encrypted information encrypted by the encrypting device according to embodiments 1 to 8 into information, and consists of an encrypted information obtaining unit, a unitization-for-inverse conversion unit, an inverse conversion unit, and an original information coupling unit.

The decrypting device according to this embodiment will be described below separately for its functional configuration, a hardware configuration, and a processing method.

### <Functional configuration>

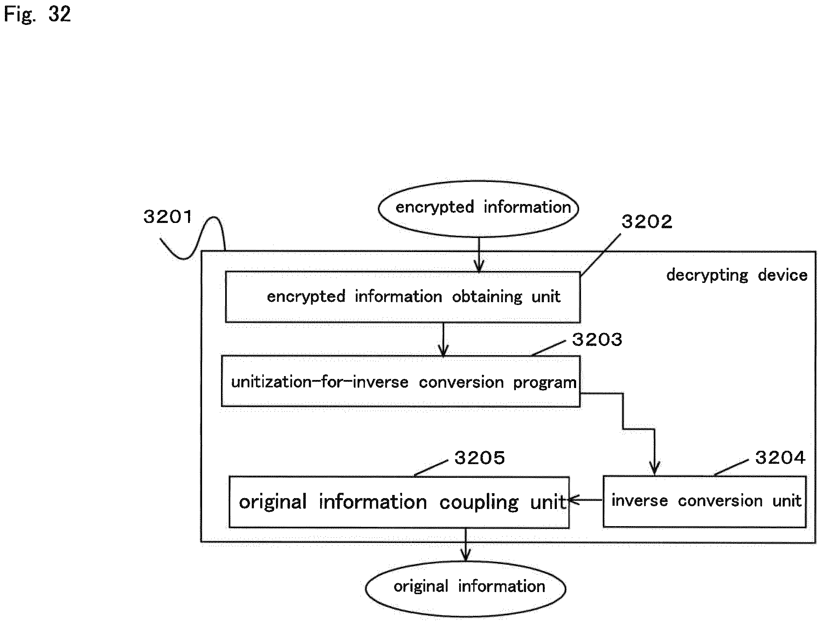

Fig. 32 is a functional block of the decrypting device according to the embodiment 9. In the decrypting device (3201), the encrypted information obtaining unit (3202), the unitization-for-inverse conversion unit (3203), the inverse conversion unit (3204), and the original information coupling unit (3205) are present. The respective functions will be described below.

The "encrypted information obtaining unit" is a function of obtaining encrypted information.

The "unitization-for-inverse conversion unit" is a function of unitizing the obtained encrypted information to unitized encrypted information in the 16-byte unit which is a unit for conversion in the inverse conversion unit which will be described later.

The "inverse conversion unit" is a function of converting, inversely with respect to the conversion at the conversion step, the unitized encrypted information unitized in the unitization-for-inverse conversion unit into inversely-converted unitized information.

The "original information coupling unit" is a function of coupling all the inversely-converted unitized information obtained in the inverse conversion unit into original information which is information to be an origin of the encrypted information.

As a result, the encrypted information encrypted by the encrypting device according to the embodiments 1 to 8 can be decrypted into information.

### <Hardware configuration>

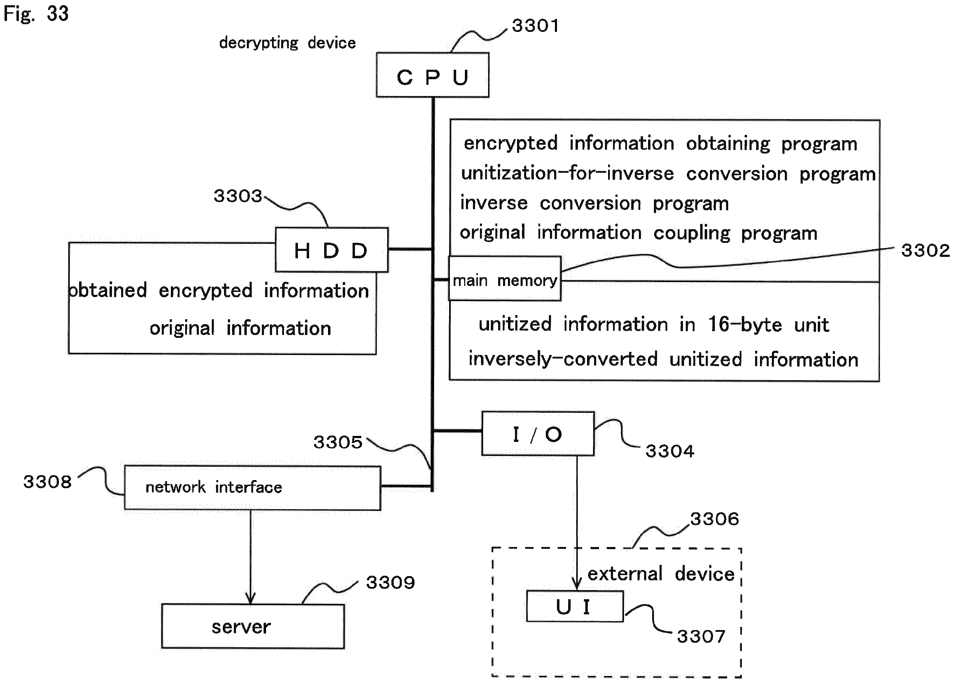

Fig. 33 is a schematic view illustrating an example of a configuration of the decrypting device in which each of the aforementioned functional constituent element is realized as hardware. The encrypting device includes a "CPU (Central Processing Unit)" (3301), a "main memory" (3302), an "HDD" (3303), an "I/O (input/output)" (3304), a "system bus" (3305) and a "network interface" (3308) conducting transmission/reception of information with a server (3309), and an "external device" (3306) includes an "UI" (3307). The programs stored in the "main memory" in this embodiment are an encrypted information obtaining program, a unitization-for-inverse conversion program, and an inverse conversion program, and an original information coupling program. It should be noted that the "server" and the "network interface" are not indispensable constituent elements in the present invention. Based on the above, by using these figures, respective hardware components in each processing in this device will be described.

The "I/O" in the decrypting device obtains the encrypted information transmitted from the "UI (user interface)" of an external device. The obtained encrypted information is stored in the "HDD". Then, this obtained encrypted information is unitized to the unitized encrypted information in the 16-byte unit which is a unit for conversion by the inverse conversion unit by the operation processing of the "CPU". This unitized unitized encrypted information is stored in the "main memory". Moreover, this unitized encrypted information is inversely converted into the inversely-converted unitized information using a function which cannot be expressed in a linear expression by the operation processing of the "CPU". This inversely-converted unitized information is stored in the "main memory".

Moreover, the generated inversely-converted unitized information is coupled into the original information by the operation processing of the "CPU", which is information to be the origin of the encrypted information. This original information is stored in the "HDD".

As a result, the encrypted information encrypted by the encrypting device according to the embodiments 1 to 8 can be decrypted into information.

### <Flow of processing>

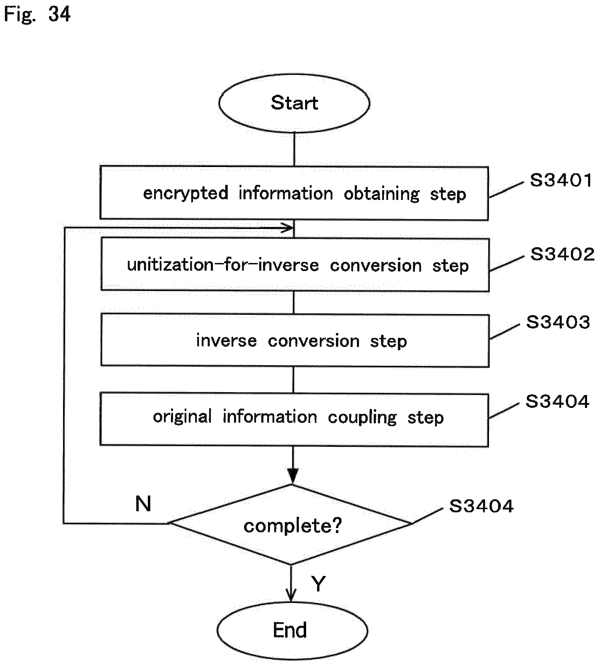

Fig. 34 is a flowchart illustrating an example of a flow of the processing in the decrypting device of this embodiment. The flow includes an encrypted information obtaining step (S3401), a unitization-for-inverse conversion step (S3402), an inverse conversion step (S3403), an original information coupling step (S3404), and a determination step (S3405) on whether all the coupling have been completed. By using this view, the flow of each processing in this device will be described.

The "encrypted information obtaining step" is a stage of obtaining the encrypted information.

The "unitization-for-inverse conversion step" is a stage of unitizing the obtained encrypted information to unitized encrypted information in the 16-byte unit which is a unit for conversion in the inverse conversion step.

The "inverse conversion step" is a stage of converting, inversely with respect to the conversion in the conversion step, the unitized encrypted information unitized by the unitization-for-inverse conversion step.

The "original information coupling step" is a stage of coupling all the inversely-converted unitized information obtained in the inverse conversion step into the original information which is information to be the origin of the encrypted information.

As a result, the encrypted information encrypted by the encrypting device according to the embodiments 1 to 8 can be decrypted into information.

### [Reference Numerals]

CPU (Central Processing Unit): 0301, 0701, 1201, 1701, 2101, 2 401, 2701, 3001, 3301
main memory: 0302, 0702, 1202, 1702, 2102, 2402, 2702, 3002, 3302
HDD: 0303, 0703, 1203, 1703, 2103, 2403, 2703, 3003, 3303 I/O (input/output): 0304, 0704, 1204, 1704, 2104, 2404, 2704, 3004, 3304
systembus: 0305, 0705, 1205, 1705, 2105, 2405, 2705, 3005, 3305 external device: 0306, 0706, 1206, 1706, 2106, 2406, 2706, 3006, 3306
UI (user interface) : 0307, 0707, 1207, 1707, 2107, 2407, 2707, 3007, 3307
network interface: 0308, 0708, 1208, 1708, 2108, 2408, 2708, 3008, 3308
server: 0309, 0709, 1209, 1709, 2109, 2409, 2709, 3009, 3309

## Claims

1. An encrypting device for encrypting information into encrypted information, composed of:
an information obtaining unit for obtaining information;
a unitization-for-conversion unit for unitizing the obtained information to unitized information in 16-byte unit for conversion in a conversion unit which will be described later; and
the conversion unit for converting the unitized information unitized in the unitization-for-conversion unit into converted unitized information using a function which cannot be expressed in a single linear expression.

2. The encrypting device according to claim 1, further including an encrypted information coupling unit for coupling all the converted unitized information obtained in the conversion unit into encrypted information.

3. The encrypting device according to claim 1 or 2, wherein the conversion unit includes a combined converting means for executing combined conversion in which forward conversion and inverse conversion for the same conversion are combined with adjacent original conversion.

4. The encrypting device according to claim 3, wherein the conversion unit includes an exclusive OR processing means for executing conversion processing in which: exclusive OR processing is executed on two or more of forward conversion results obtained as results of operations of a front stage combining the forward conversion with input values; and then the same number of conversion processing by a rear stage as the input values is obtained in which the inverse conversion is combined.

5. The encrypting device according to any one of claims 1 to 4, wherein the conversion unit holds a converting means for executing conversion using a conversion table determining a relationship between a conversion input and a conversion output which cannot be expressed in a linear expression.

6. The encrypting device according to claim 5, wherein the conversion unit includes a table applying means for applying the conversion table only to some of a plurality of conversion processing which should be executed in the conversion unit.

7. The encrypting device according to claim 5 or 6, wherein the conversion unit further includes an applied table controlling means for dynamically controlling the table which should be applied to a plurality of processing stages.

8. The encrypting device according to any one of claims 5 to 7, wherein the conversion unit further includes an applied position controlling means for dynamically controlling an applied position of the table which should be applied to the input value.

9. A decrypting device for decrypting encrypted information encrypted by the encrypting device according to any one of claims 1 to 8 into information, composed of:
an encrypted information obtaining unit for obtaining the encrypted information;
a unitization-for-inverse conversion unit for unitizing the obtained encrypted information to unitized encrypted information in the 16-byte unit for conversion in an inverse conversion unit which will be described later;
the inverse conversion unit for converting, inversely with respect to the conversion in the converting unit, the unitized encrypted information unitized in the unitization-for-inverse conversion unit into inversely-converted unitized information; and
an original information coupling unit for coupling all the inversely-converted unitized information obtained in the inverse conversion unit into original information which is information to be an origin of the encrypted information.

10. An encrypting program for encrypting information into encrypted information, wherein
the encrypting program is composed of:
an information obtaining step for obtaining information;
a unitization-for-conversion step for unitizing the obtained information to unitized information in 16-byte unit for conversion in a conversion step which will be described later; and
the conversion step for converting the unitized information unitized in the unitization-for-conversion step into converted unitized information using a function which cannot be expressed in a single linear expression, and
the encrypting program can be read out and executed by a computer.

11. The encrypting program according to claim 10, further including an encrypted information coupling step for coupling all the converted unitized information obtained in the conversion step into encrypted information.

12. The encrypting program according to claim 10 or 11, wherein the conversion step includes a combined conversion sub-step for executing combined conversion in which forward conversion and inverse conversion for the same conversion are combined with adjacent original conversion.

13. The encrypting program according to claim 12, wherein the conversion step includes an exclusive OR processing sub-step for executing conversion processing in which: exclusive OR processing is executed on two or more of forward conversion results obtained as results of operations of a front stage combining the forward conversion with input values; and then the same number of conversion processing by a rear stage as the input values is obtained in which the inverse conversion is combined.

14. The encrypting program according to any one of claims 10 to 13, wherein the conversion step holds a conversion sub-step for executing conversion using a conversion table determining a relationship between a conversion input and a conversion output which cannot be expressed in a linear expression.

15. The encrypting program according to claim 14, wherein the conversion step includes a table applying sub-step for applying the conversion table only to some of a plurality of operation processing which should be executed in the conversion step.

16. The encrypting program according to claim 14 or 15, wherein the conversion step further includes an applied table control sub-step for dynamically controlling the table which should be applied to a plurality of processing stages.

17. The encrypting program according to any one of claims 14 to 16, wherein the conversion step further includes an applied position control sub-step for dynamically controlling an applied position of the table which should be applied to the input value.

18. A decrypting program for decrypting encrypted information encrypted by the encrypting program according to any one of claims 10 to 17 into information, wherein
the encrypting program is composed of:
an encrypted information obtaining step for obtaining the encrypted information;
a unitization-for-inverse conversion step for unitizing the obtained encrypted information to unitized encrypted information in the 16-byte unit for conversion in an inverse conversion step which will be described later;
the inverse conversion step for converting, inversely with respect to the conversion in the conversion step, the unitized encrypted information unitized in the unitization-for-inverse conversion unit into inversely-converted unitized information; and
an original information coupling step for coupling all the inversely-converted unitized information obtained in the inverse conversion step into original information which is information to be an origin of the encrypted information, and
the encrypting program can be read out and executed by a computer.

19. An encrypting method for encrypting information into encrypted information, wherein
the encrypting method is composed of:
an information obtaining step for obtaining information;
a unitization-for-conversion step for unitizing the obtained information to unitized information in 16-byte unit for conversion in a conversion step which will be described later; and
the conversion step for converting the unitized information unitized in the unitization-for-conversion step into converted unitized information using a function which cannot be expressed in a single linear expression, and
the encrypting method is executed by a computer.

20. The encrypting method according to claim 19, further including an encrypted information coupling step for coupling all the converted unitized information obtained in the conversion step into encrypted information.

21. The encrypting method according to claim 19 or 20, wherein the conversion step includes a combined conversion sub-step for executing combined conversion in which forward conversion and inverse conversion for the same conversion are combined with adjacent original conversion.

22. The encrypting method according to claim 21, wherein the conversion step includes an exclusive OR processing sub-step for executing conversion processing in which: exclusive OR processing is executed on two or more of forward conversion results obtained as results of operations of a front stage combining the forward conversion with input values; and then the same number of conversion processing by a rear stage as the input values is obtained in which the inverse conversion is combined.

23. The encrypting method according to any one of claims 19 to 22, wherein the conversion step holds a conversion sub-step for executing conversion using a conversion table determining a relationship between a conversion input and a conversion output which cannot be expressed in a linear expression.

24. The encrypting method according to claim 23, wherein the conversion step includes a table applying sub-step for applying the conversion table only to some of a plurality of operation processing which should be executed in the conversion step.

25. The encrypting method according to claim 23 or 24, wherein the conversion step further includes an applied table control sub-step for dynamically controlling the table which should be applied to a plurality of processing stages.

26. The encrypting method according to any one of claims 23 to 25, wherein the conversion step further includes an applied position control sub-step for dynamically controlling an applied position of the table which should be applied to the input value.

27. A decrypting method for decrypting encrypted information encrypted by the encrypting method according to any one of claims 19 to 26 into information, wherein
the encrypting method is composed of:
an encrypted information obtaining step for obtaining the encrypted information;
a unitization-for-inverse conversion step for unitizing the obtained encrypted information to unitized encrypted information in the 16-byte unit for conversion in an inverse conversion step which will be described later;
the inverse conversion step for converting, inversely with respect to the conversion in the conversion step, the unitized encrypted information unitized in the unitization-for-inverse conversion unit into inversely-converted unitized information; and
an original information coupling step for coupling all the inversely-converted unitized information obtained in the inverse conversion step into original information which is information to be an origin of the encrypted information, and
the encrypting method is executed by a computer.
